# EUROPEAN PATENT SPECIFICATION

(11) **EP 4 557 577 B1**
(45) Date of publication and mention of the grant of the patent: **07.10.2026**
(21) Application number: 25168510.3
(22) Date of filing: 26.03.2021
(51) Int. Cl.: H04M 1/72409, H02J 7/00, H02J 50/10, H02J 50/40, H04M 1/02

(54) **ELECTRONIC DEVICE AND METHOD FOR SHARING BATTERY IN ELECTRONIC DEVICE**
ELEKTRONISCHE VORRICHTUNG UND VERFAHREN ZUR GEMEINSAMEN NUTZUNG EINER BATTERIE IN EINER ELEKTRONISCHEN VORRICHTUNG
DISPOSITIF ÉLECTRONIQUE ET PROCÉDÉ DE PARTAGE DE BATTERIE DANS UN DISPOSITIF ÉLECTRONIQUE

(30) Priority: 04.05.2020 KR 20200053309
(43) Date of publication of application: 21.05.2025
(60) Divisional application: 26188053.8 / 4 790 867
(62) Document number(s) of the earlier application(s) in accordance with Art. 76 EPC: 21799832.7 / 4 124 005
(73) Proprietor: Samsung Electronics Co., Ltd., Suwon-si, Gyeonggi-do 16677 (KR)
(72) Inventor: Lim, Seokjin, Suwon-si, Gyeonggi-do 16677 (KR); Park, Chunhyoung, Suwon-si, Gyeonggi-do 16677 (KR); Lee, Jangwoo, Suwon-si, Gyeonggi-do 16677 (KR); Lim, Yujin, Suwon-si, Gyeonggi-do 16677 (KR); Cho, Jinhoon, Suwon-si, Gyeonggi-do 16677 (KR)
(74) Representative: Gulde & Partner

(56) References cited:
- US-A1- 2015 248 149
- US-A1- 2018 123 379
- US-A1- 2020 067 340

## Description

### [Technical Field]

Various embodiments relate to an electronic device and a method for sharing a battery in the electronic device, which allow the electronic device or an external device to be controlled while a battery of the electronic device is shared with the external device.

### [Background Art]

Wireless charging or contactless charging technologies have been developed and employed in various electronic devices recently. The wireless charging technology uses wireless electric power transmission and reception and may be a technology by which electric power is wirelessly transferred from a power transmission device to a power reception device to charge a battery of the power reception device without connection by an additional charging connector between the power reception device and the power transmission device.

A battery may be shared between electronic devices by using the wireless charging technology.
US 2015/248149 A1 discloses a conventional portable electronic device having foldable display.

### [Detailed Description of the Invention]

### [Technical Problem]

There is an inconvenience in that a user has to directly turn on battery sharing to share a battery with an external device by using a wireless charging technology in an electronic device and the user has to directly turn off battery sharing to end the battery sharing with the external device. Furthermore, even after the battery sharing is turned on by the user in the electronic device, electric power may not be supplied to the external device from the electronic device when the external device is not accurately detected from a charging area in which a wireless charging coil is disposed in a housing of the electronic device. In addition, as electric power is supplied to the external device detected on the housing of the electronic device in a state in which the electronic device is turned upside down while the electronic device supplies electric power to the external device, electric power supply to the external device should be turned off to use the electronic device.

Various embodiments relate to an electronic device and a method for sharing a battery in the electronic device which allow the electronic device or an external device to be controlled while a battery of the electronic device is shared with the external device.

### [Technical Solution]

The present invention is defined by the appended set of claims. An electronic device according to various embodiments may include: a first housing; a second housing, a first hinge for connecting one side of the first housing to one side of the second housing to be foldable, a third housing, a second hinge for connecting another side of the second housing to one side of the third housing to be foldable, a display including a first display area arranged on the first housing, a second display area arranged on the second housing, and a third display area arranged on the third housing, and a processor which is configured to, in a first state in which the first hinge and the second hinge are unfolded, detect folding of at least one of the first hinge or the second hinge and supply electric power to an external device while displaying information on the first display area when a first signal corresponding to detection of the external device is identified from at least one of the second housing and the third housing each including a wireless power transmission/reception circuit. Various other embodiments may be provided.

According to various embodiments, a method for sharing a battery in an electronic device may include, in a first state in which a first hinge connecting one side of a first housing having a first display area arranged thereon to one side of a second housing having a second display area arranged thereon to be foldable and a second hinge connecting another side of the second housing to one side of a third housing having a third display area arranged thereon to be foldable are unfolded, an operation of detecting folding of at least one of the first hinge or the second hinge, an operation of identifying a first signal corresponding to detection of the external device from at least one of the second housing or the third housing each including a wireless power transmission/reception circuit, and an operation of supplying electric power to an external device while displaying information on the first display area.

### [Advantageous Effects]

According to various embodiments, an electronic device may easily supply electric power to an external device according to a folding state and whether the external device is recognized.

According to various embodiments, the electronic device may control and manage information of the electronic device and information of an external device through at least one display area of the electronic device exposed at a visibly convenient angle while electric power is supplied to the external device.

According to various embodiments, as an electronic device may control an external device through at least one display area of the electronic device while electric power is supplied to the external device, it is possible to reduce the possibility of physical movement of the external device being charged for controlling the external device.

According to various embodiments, when a wireless power transmission/reception circuit is included in a second housing among multiple housings of an electronic device and an external accessory (e.g., a case) is mounted to a third housing, electric power may be smoothly supplied to an external device detected from the second housing without interference or danger from the external accessory.

### [Brief Description of Drawings]

FIG. 1 is a block diagram illustrating an electronic device in a network environment according to various embodiments.
FIG. 2 is a block diagram of an electronic device according to various embodiments.
FIG. 3A, FIG. 3B, and FIG. 3C are views illustrating a display of an electronic device according to various embodiments.
FIG. 4A, FIG. 4B, and FIG. 4C are views illustrating an operation of supplying electric power to an external device from an electronic device according to various embodiments.
FIG. 5 is a view illustrating various external devices capable of receiving electric power from an electronic device according to various embodiments.
FIG. 6 is a flowchart illustrating an operation of supplying electric power to an external device from an electronic device according to various embodiments.
FIG. 7 is a flowchart illustrating an operation of supplying electric power to an external device from an electronic device according to various embodiments.
FIG. 8 is a flowchart illustrating an operation of supplying electric power to an external device from an electronic device according to various embodiments.
FIG. 9 is a flowchart illustrating an operation of supplying electric power to an external device from an electronic device according to various embodiments.
FIG. 10 is a flowchart illustrating an operation of providing a guide UI for battery sharing in an electronic device according to various embodiments.
FIG. 11A and FIG. 11B are views illustrating a guide UI for battery sharing in an electronic device according to various embodiments.
FIG. 12 is a signal flow diagram illustrating an information displaying operation of an external device while electric power is supplied to the external device from an electronic device according to various embodiments.
FIG. 13 is a view illustrating an information displaying operation of an external device while electric power is supplied to the external device from an electronic device according to various embodiments.
FIG. 14A and FIG. 14B are views illustrating an information displaying operation of an external device while electric power is supplied to the external device from an electronic device according to various embodiments.
FIG. 15A and FIG. 15B are views illustrating an information displaying operation of an external device while electric power is supplied to the external device from an electronic device according to various embodiments.
FIG. 16A, FIG. 16B, and FIG. 16C are views illustrating an information displaying operation of an external device while electric power is supplied to the external device from an electronic device according to various embodiments.
FIG. 17 is a view illustrating an information displaying operation of an external device while electric power is supplied to the external device from an electronic device according to various embodiments.
FIG. 18 is a signal flow diagram illustrating a control operation of an external device while electric power is supplied to the external device from an electronic device according to various embodiments.
FIG. 19A and FIG. 19B are views illustrating a control operation of an external device while electric power is supplied to the external device from an electronic device according to various embodiments.
FIG. 20 is a flowchart illustrating a control operation of an external device while electric power is supplied to the external device from an electronic device according to various embodiments.
FIG. 21 is a flowchart illustrating a control operation of an external device while electric power is supplied to the external device from an electronic device according to various embodiments.
FIG. 22A and FIG. 22B are views illustrating a control operation of an external device while electric power is supplied to the external device from an electronic device according to various embodiments.
FIG. 23 is a flowchart illustrating an operation of supplying electric power to an external device from an electronic device according to various embodiments.
FIG. 24 is a view illustrating an operation of supplying electric power to an external device from an electronic device according to various embodiments.
FIG. 25A, FIG. 25B, and FIG. 25C are views illustrating a control operation of an external device while electric power is supplied to the external device from an electronic device according to various embodiments.

### [Mode for Carrying out the Invention]

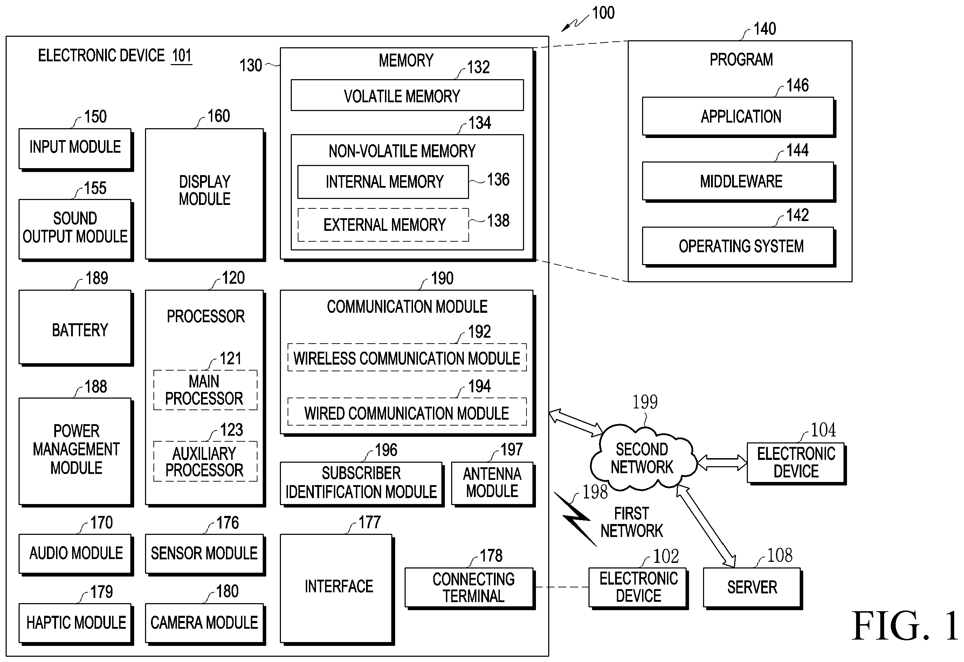

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by a component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

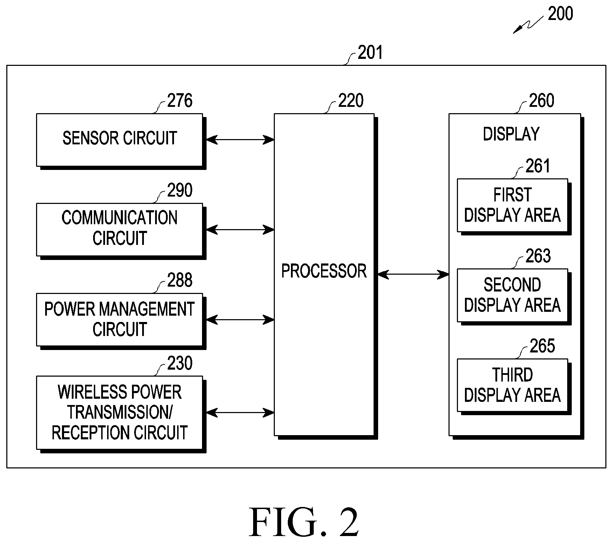

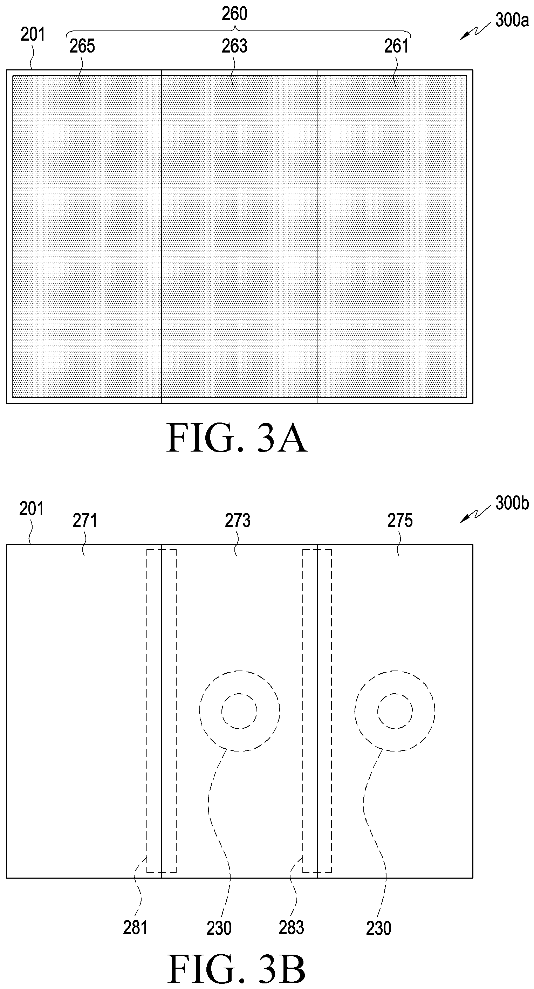

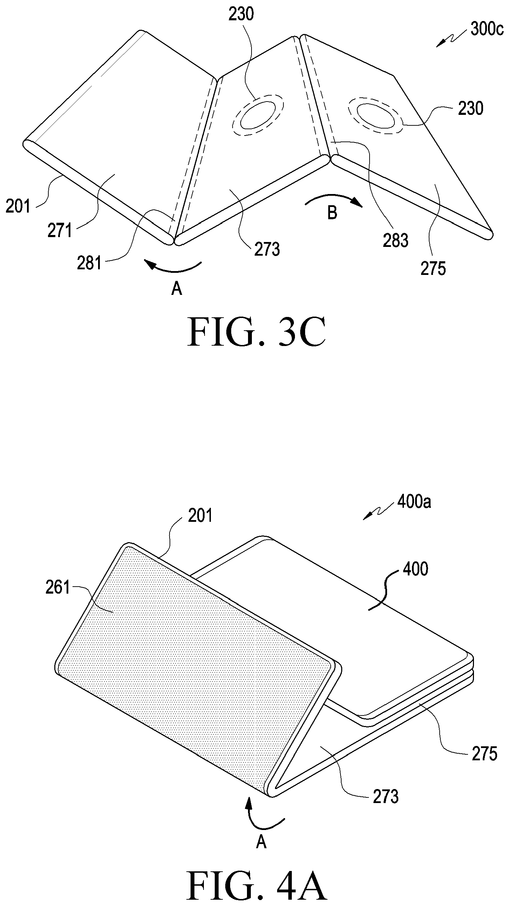

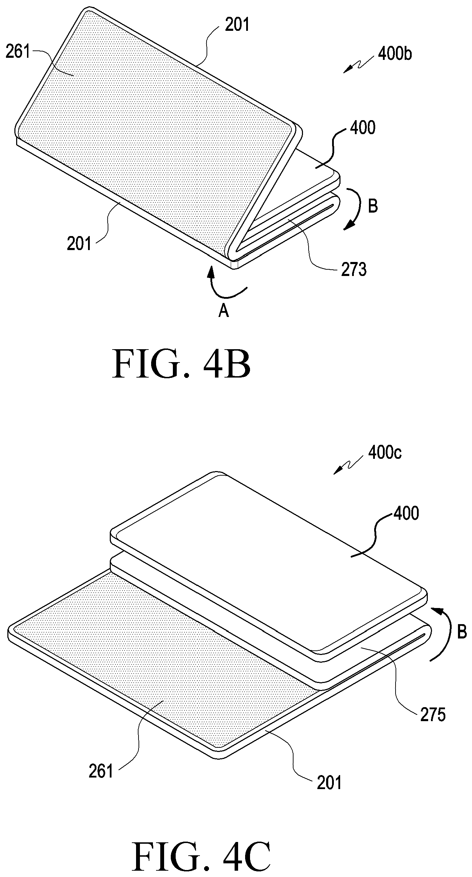

FIG. 2 is a block diagram 200 of an electronic device according to various embodiments, FIG. 3A, FIG. 3B, and FIG. 3C are views (FIG. 300A to FIG. 300C) illustrating a display of an electronic device according to various embodiments, and FIG. 4A, FIG. 4B, and FIG. 4C are views (400A to FIG. 400C) illustrating an operation of supplying electric power to an external device from an electronic device according to various embodiments.

Referring to FIG. 2, the electronic device 201 (e.g., the electronic device 101 in FIG. 1) may include a display 260, a processor 220, a sensor circuit 276, a communication circuit 290, a power management circuit 288, and a wireless transmission/reception circuit 230.

According to an embodiment, the display 260 may include a first display area 261, a second display area 263, and a third display area 265. The first display area 261 may be changed in a position at a predetermined angle according to folding of a first hinge, and the third display area 265 may be changed in a position at a predetermined angle according to folding of a second hinge.

According to an embodiment, the display 260 may be the same as the display device 160 in FIG. 1, or may perform at least one function or operation performed by the display device 160.

The display 260 may be described with reference to FIG. 3A to FIG. 3C and FIG. 4A to FIG. 4C below.

FIG. 3A is a view illustrating a front surface of the electronic device 201 according to various embodiments, and the electronic device 201 may include the display 260 including the first display area 261, the second display area 263, and the third display area 265.

FIG. 3B is a view illustrating a rear surface of the electronic device 201 according to various embodiments, and the electronic device 201 may include a first housing 271 having the first display area 261 arranged thereon, a second housing 273 having the second display area 263 arranged thereon, and third housing 275 having the third display area 265 arranged thereon. At least one of the second housing 273 or the third housing 275 may include a charging area including the wireless power transmission/reception circuit 230. The charging area including the wireless power transmission/reception circuit 230 may be formed of a material capable of preventing slipping to prevent an external device placed for electric power supply from being easily displaced. The electronic device 201 may include a first hinge 281 for connecting one side of the first housing 271 to one side of the second housing 273 to be foldable and a second hinge 283 for connecting another side of the second housing 273 to one side of the third housing 275 to be foldable.

FIG. 3C is a view illustrating a folding state of the electronic device 201 according to various embodiments, and first hinge 281 may be an out-foldable hinge and the second hinge 283 may be an in-foldable hinge.

The out-folding may refer that the display of the electronic device exposes a partial area of the display to the outside by folding the display in an outward direction (A) from the front surface of the display which is completely unfolded. Therefore, when the first hinge 281 is out-folded, the first display area 261 arranged on the first housing 271 connected to the first hinge 281 may be exposed to the outside.

The in-folding may refer that the display of the electronic device does not expose a partial area of the display to the outside by folding the display in an inward direction (B) from the front surface of the display which is completely unfolded. Accordingly, when the second hinge 283 is in-folded, the third display area 265 arranged on the third housing 275 connected to the second hinge 283 and the second display area 263 arranged on the unfolded second housing 273 face each other so that the second display area 263 and the third display area 265 may not be exposed.

Due to the out-folding of the first hinge 281, the first display area 261 arranged on the first housing 271 connected to the first hinge 281 may be changed in position to correspond to an angle of the out-folding of the first hinge 281.

Due to the in-folding of the second hinge 283, the third display area 261 arranged on the third housing 275 connected to the second hinge 283 may be changed in position to correspond to an angle of the folding of the second hinge 283, and the third housing 275 having been changed in position according to the in-folding of the second hinge 283 may cover the second display area 263 arranged on the second housing 273.

FIG. 4A illustrates a first charging state in which electric power may be supplied to an external device. In a first state in which the first hinge 281 and the second hinge 283 are unfolded as shown in FIG. 3A and FIG. 3B, as the first hinge 281 is out-folded in the outward direction (A) of the display as shown in FIG. 4A and an angle of the out-folding of the first hinge 281 falls within a first threshold angle range (e.g., 45 degrees or more), only the first display area 261 may be exposed, and in the first charging state in which an external device 400 is placed on at least one of the second housing 273 and the third housing 275, electric power may be supplied to the external device 400.

FIG. 4B illustrates a second charging state in which electric power may be supplied to an external device. In the first state in which the first hinge 281 and the second hinge 283 are unfolded as shown in FIG. 3A and the FIG. 3B, as the first hinge 281 is out-folded in the outward direction (A) of the display as shown in FIG. 4B and an angle of the out-folding of the first hinge 281 falls within the first threshold angle range (e.g., 45 degrees or more), only the first display area 261 may be exposed, and when the second hinge 283 is in-folded in the inward direction (B) of the display and an angle of the in-folding of the second hinge falls within a second threshold angle range (e.g., 0 degrees to 180 degrees) and in the second charging state in which the external device 400 is placed on the second housing 273, electric power may be supplied to the external device 400.

FIG. 4C illustrates a third charging state in which electric power may be supplied to an external device. In the first state in which the first hinge 281 and the second hinge 283 are unfolded as shown in FIG. 3A and FIG. 3B, as the second hinge 283 is in-folded in the inward direction (B) of the display as shown in FIG. 4C and an angle of the in-folding of the second hinge 283 falls within the second threshold angle range (e.g., 0 degrees to 180 degrees), only the first display area 261 may be exposed, and when the second display area 263 is covered by the third housing 275 and in the third charging state in which the external device 400 is placed on the third housing 275, electric power may be supplied to the external device 400.

According to various embodiments, the processor 220 may control the overall operation of the electronic device 201 and may be the same as the processor 120 in FIG. 1 or perform at least one function or operation performed by the processor 120.

According to various embodiments, when at least one of the first hinge 281 or the second hinge 283 is folded and a first signal corresponding to detection of an external device from at least one of the second housing 273 or the third housing 275 is identified, the processor 220 may supply electric power to the external device while displaying information on the first display area 261.

According to an embodiment, in the first state in which the first hinge 281 and the second hinge 283 are unfolded as shown in FIG. 3A and FIG. 3B,

When the first hinge 281 is out-folded as shown in FIG. 4A, and an angle of the out-folding of the first hinge 281 falls within the first threshold angle range (e.g., 45 degrees or more), and in the first charging state in which the first signal corresponding to detection of the external device 400 from at least one of the second housing 273 and the third housing 275, electric power may be supplied to the external device 400.

According to an embodiment, in the first state in which the first hinge 281 and the second hinge 283 are unfolded as shown in FIG. 3A and FIG. 3B,

when the first hinge 281 is out-folded as shown in FIG. 4A, an angle of the out-folding of the first hinge 281 falls within the first threshold angle range (e.g., 45 degrees or more), the second hinge 283 is in-folded, and an angle of the in-folding of the second hinge falls within the second threshold range (e.g., 0 degrees to 180 degrees), and in the second charging state in which the first signal corresponding to detection of the external device 400 from the second housing 283, electric power may be supplied to the external device 400.

According to an embodiment, in the first state in which the first hinge 281 and the second hinge 283 are unfolded as shown in FIG. 3A and FIG. 3B, when the second hinge 283 is in-folded shown in FIG. 4C and an angle of the in-folding of the second hinge 283 falls within the second threshold angle range (e.g., 0 degrees to 180 degrees), and in the third charging state in which the first signal corresponding to detection of the external device 400 from the third housing 275, the processor 220 may supply electric power to the external device 400. According to an embodiment, when the first charging state as shown in FIG. 4A, the second charging state as shown in FIG. 4B, or the third charging state as shown in FIG. 4C is identified and the first charging state, the second charging state, or the third charging state is maintained for a predetermined time, the processor 220 may supply electric power to the external device 400.

According to an embodiment, when the first signal corresponding to detection of an external device from at least one of the second housing 273 or the third housing 275 is identified, the processor 220 may display a guide UI on the first display area 261 so that the external device 400 is placed on a charging area for wireless battery sharing.

According to various embodiments, when at least one of the first hinge 281 or the second hinge 283 is unfolded or a first signal corresponding to detection of an external device 400 from at least one of the second housing 273 or the third housing 275 is not identified while electric power is supplied to the external device, the processor 220 may not supply electric power to the external device.

According to various embodiments, the processor 220 may display information of the external device on the first display area 261 or a screen of the external device, based on the access authority information received from the external device while electric power is supplied to the external device, so as to control an operation of the external device.

According to an embodiment, the processor 220 may connect near field communication with the external device according to a near field communication connection (e.g., BT connection) request received from the external device while electric power is supplied to the external device, and receive access authority information from the external device.

According to an embodiment, the processor 220 may receive first access authority information for allowing surrogate display of information of the external device from the external device while electric power is supplied to the external device, and when an input for allowing surrogate display of information of the external device on the first display area 261 by a user of the electronic device 201 is received, display the information of the external device on the first display area 261 together with information of the electronic device 201. For example, the processor 220 may control to separately display information on a charging state of the external device and information on a battery sharing state of the electronic device on the first display area 261 by using positions or colors. For example, the processor 220 may control to separately display notification information (e.g., notification corresponding to an application (e.g., message notification information)) of the external device and notification information of the electronic device on the first display area 261 by using positions and colors.

According to an embodiment, the processor 220 may receive second access authority information for allowing control an operation of the external device from the external device while electric power is supplied to the external device, and when an input for allowing control an operation of the external device by a user of the electronic device 201 is received, control an operation of the external device while sharing a screen of the external device on at least a partial area or the entire area of the first display area 261. The processor 220 may control an operation of the external device while sharing a screen of the external device on at least a partial area or the entire area of the first display area 261 through a mirroring function for linking with the external device 400. For example, the processor 220 may display the screen of the external device on at least a partial area or the entire area of the first display area 261 and control data displayed on the screen of the external device to cause the external device 400 to perform an operation corresponding to the control of the data. For example, the processor 220 may separate the first display area 261 into a first area and a second area, and display the screen of the external device on the first area and the screen of the electronic device 201 on the second area. When there is a user gesture (e.g., dragging) for moving at least one file among files being displayed on the first area to the second area while data of the external device is displayed on the first area, the processor 220 may store the at least one file being displayed on the first area in the electronic device 201 in response to the user gesture. In addition, the processor 220 may execute at least one application selected from among applications through the screen of the external device displayed on the first area.

For example, the processor 220 may display the screen of the external device on at least a partial area or the entire area of the first display area and execute applications of the external device displayed on the screen of the external device.

According to an embodiment, the processor 220 may continuously perform the operation of the external device in the electronic device while electric power is supplied to the external device. For example, the processor may stop audio data output through a speaker of the external device and output the audio data through a speaker of the electronic device while electric power is supplied to the external device.

According to an embodiment, the second access authority information received from the external device may include the first access authority information.

According to an embodiment, the access authority information received from the external device may be configured by a user in advance.

According to various embodiments, when the access authority information is received from the external device, and an input for rejecting the access authority information of the external device by a user of the electronic device 201 is received or the access authority information is not received from the external device, the processor 220 may display only information of the electronic device on the first display area 261 or may control an operation of the electronic device while displaying a screen of the electronic device through the first display area 261.

According to various embodiments, when a first external device related to the external device is connected while electric power is supplied to the external device, the processor 220 may be connected to the first external device from the electronic device and perform an operation of the first external device. For example, when a first signal corresponding to detection of a charging case which is an external device from at least one of the second housing or the third housing of the electronic device 201 is identified, while the electronic device 201 is connected to a first ear buds (e.g., a pair of earphones) and outputs first audio data through the first ear buds, the processor 220 may supply electric power to the charging case. When another electronic device is connected to the charging case to which electric power is supplied so that a second ear bud (e.g., a pair of earphones) for outputting second audio data is mounted, the processor 220 may output the second audio data through the speaker of the electronic device 201.

According to various embodiments, when the first charging state as shown in FIG. 4A, the second charging state shown in FIG. 4B, or the third charging state as shown in FIG. 4C is identified, the processor 220 may not automatically supply electric power to the external device, notify recognition of the external device on the first display area 261, and display a pop-up window including a button for supplying electric power to the external device.

According to various embodiments, when folding with respect to at least one of the first hinge 281 or the second hinge 283 is detected in the first state in which the first hinge 281 and the second hinge 283 are unfolded after electric power supply to the external device is configured directly by a user through a menu and, the processor 220 may stereoscopically display an UI on a position corresponding to the wireless power transmission/reception circuit 230 from a time point when an folding operation of the hinge starts and to a time point when the operation ends.

According to various embodiments, when unfolding of the first hinge 281 or the second hinge 283 is detected while electric power is supplied to the external device in a first charging state as shown in FIG. 4A or the second charging state as shown in FIG. 4B, the processor 220 may release the connection to the external device, and a display of the external device may display a standby screen or continuously display the information of the external device, which has been displayed on the first display area 261 of the electronic device before disconnecting from the electronic device.

According to various embodiments, the sensor circuit 276 may include at least one sensor for detecting a state of the electronic device 201. The sensor circuit 276 may detect at least one of shaking of the electronic device 201 and pressure applied to the electronic device 201.

According to an embodiment, the sensor circuit 276 may include a proximity sensor for detecting whether an external device approaches the electronic device 201, an illuminance sensor (not shown) for detecting an amount of light around the electronic device 201, or a motion sensor (not shown) for detecting an operation (e.g., rotation of the electronic device 201 or acceleration or vibration applied to the electronic device 101) of the electronic device 201, a geo-magnetic sensor (not shown) for detecting a point of the compass by using the geomagnetic field, a gravity sensor for detecting an applying direction of gravity, and an altimeter for detecting an altitude by measuring atmospheric pressure. The sensor circuit 276 may transmit a detected signal to the processor 220.

According to an embodiment, the sensor circuit 276 may include a sensor capable of detecting pressure or weight generated as external device is placed on the housing of the electronic device 201.

According to an embodiment, the sensor circuit 276 may include at least one magnetic sensor, recognize movement of the x-axis, y-axis, and z-axis of the external device placed in the housing of the electronic device 201, and transmit a signal corresponding to a position of the external device detected from the housing of the electronic device 201 to the processor 220.

According to an embodiment, the sensor circuit 276 may be disposed in each of the first housing 271, the second housing 273, and the third housing 275, or may be selectively disposed.

According to an embodiment, each sensor of the sensor circuit 276 may be added or omitted according to performance of the electronic device 101.

According to an embodiment, the sensor circuit 276 may be the same as the sensor module 176 in FIG. 1, or may perform at least one function or operation performed by the sensor module 176.

According to various embodiments, the communication circuit 290 may be implemented substantially the same as or similar to the communication module 190 in FIG. 1, and may include multiple communication circuits using different communication technologies including the communication circuit 290.

According to an embodiment, the communication circuit 290 may include a mobile communication module (not shown) and a sub communication module (not shown) that performs near field communication with a wireless LAN. The communication circuit 330 may communicate with an external device using at least one antenna (not shown) according to the control of the processor 210.

According to an embodiment, the communication circuit 290 may include at least one of a wireless LAN module (not shown) and a near field communication module (not shown), and include an NFC communication module, a Bluetooth legacy communication module, and a BLE communication module as the near field communication module (not shown).

According to various embodiments, the power management circuit 288 may be implemented substantially the same as or similar to the power management module 188 in FIG. 1, and may supply electric power to one or more batteries (not shown) arranged in the housing of the electronic device 201 according to the control of the processor 220. The one or more batteries (not shown) that may be included in the power management circuit 288 may supply electric power to the electronic device 101.

According to an embodiment, the power management circuit 288 may supply electric power input from an external power source (not shown) to the electronic device 201 through a wired cable. According to an embodiment, the power management circuit 288 may supply power wirelessly input from an external power source to the electronic device 201 through a wireless charging technology. According to an embodiment, the power management circuit 288 may supply power to an external device through wireless charging. The power management circuit 288 supplies electric power of the electronic device 201 to an external device through the wireless power transmission/reception circuit 230 provided in a portion of the housing of the electronic device 201, or receive electric power from an external device or a charger (not shown).

According to various embodiments, the wireless power transmission/reception circuit 230 may include a coil, an antenna, and the like capable of transmitting/receiving power and wirelessly transmitting/receiving power, and may have various shapes such as a spiral shape.

For example, when the external device is placed to correspond to the wireless power transmission/reception circuit 230, transmission or reception of electric power may be started through the wireless power transmission/reception circuit 230.

According to an embodiment, the wireless power transmission/reception circuit 230 may wirelessly supply electric power to an external device under the control of the processor 220 or receive wireless electric power from an external wireless power transmission electronic device (e.g., an external device or a wireless charger).

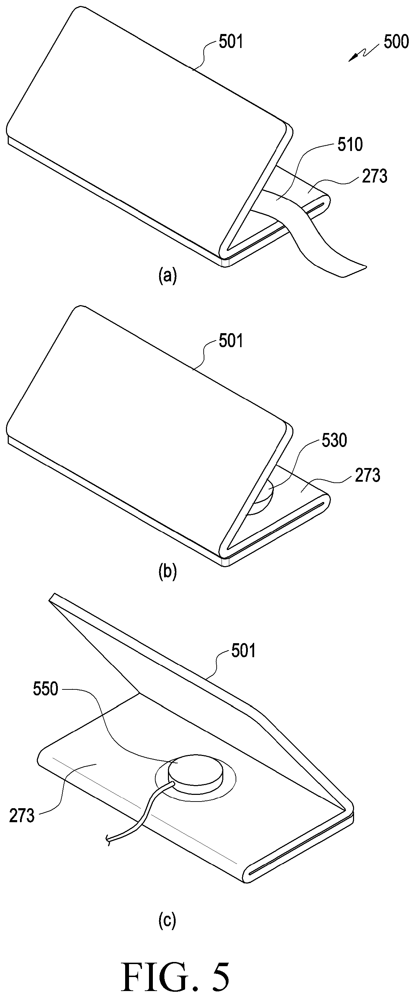

FIG. 5 is a view 500 illustrating various external devices capable of receiving electric power from an electronic device according to various embodiments.

As shown in (a) of FIG. 5 to FIG. 5C, in a second charging state (e.g., the second charging state in FIG. 4B) of the electronic device 501 (e.g., the electronic device 201 in FIG. 2), various external devices, for example, an electronic device (e.g., the external device 400 in FIG. 4A to FIG. 4C), a watch device 510 , an ear buds 530, or a small charger 550 may be placed on the second housing 273 to receive electric power from the electronic device 501.

According to various embodiments, an electronic device may include a first housing (e.g., the first housing 271 in FIG. 3B), a second housing (e.g., the second housing 273 in FIG. 3B), a first hinge (e.g., the first hinge 281 in FIG. 3B) for connecting one side of the first housing to one side of the second housing to be foldable, a third housing (e.g., the third housing 275 in FIG. 3B), a second hinge (e.g., the second hinge 283 in FIG. 3B) for connecting another side of the second housing to one side of the third housing to be foldable, a display (e.g., the display 260 in FIG. 3A) including a first display area (e.g., the first display area 261 in FIG. 3A) arranged on the first housing, a second display area (e.g., the second display area 263 in FIG. 3A) arranged on the second housing, and a third display area (e.g., the third display area 263 in FIG. 3A) arranged on the third housing, and a processor (e.g., the processor 220 in FIG. 2) which is configured to, in a first state in which the first hinge and the second hinge are unfolded, detect folding of at least one of the first hinge or the second hinge and supply electric power to an external device (e.g., the external device 400 in FIG. 4A to FIG. 4C) while displaying information on the first display area when a first signal corresponding to detection of the external device is identified from at least one of the second housing or the third housing each including a wireless power transmission/reception circuit.

According to various embodiments, the processor may be configured to supply no electric power to the external device when at least one of the first hinge or the second hinge is unfolded or the first signal is not identified from at least one of the second housing or the third housing while electric power is supplied to the external device.

According to various embodiments, the processor may be configured to detect out-folding of the first hinge in the first state and supply electric power to the external device in a first charging state in which a first signal is detected from at least one of the second housing or the third housing.

According to various embodiments, the processor may be configured to detect out-folding of the first hinge in the first state, detect in-folding of the second hinge, and supply electric power to the external device in a second charging state in which the first signal is detected from the second housing.

According to various embodiments, the processor may be configured to detect in-folding of the second hinge in the first state and supply electric power to the external device in a third charging state in which the first signal is identified from the third housing.

According to various embodiments, the processor may be configured to display a guide UI on the first display area so that the external device is placed on a charging area for wireless battery sharing in at least one of the second housing or the third housing.

According to various embodiments, the processor may be configured to displaying information of the external device and information of the electronic device on the first display area while supplying electric power to the external device, based on first access authority information received from the external device.

According to various embodiments, the processor may be configured to separately display charging state information of the external device and battery sharing information of the electronic device on the first display area.

According to various embodiments, the processor may be configured to display a screen of the external device on at least a partial area or the entire area of the first display area while supplying electric power to the external device, based on a second access authority information received from the external device and control data displayed on the screen of the external device so that the external device performs an operation corresponding to the control of the data.

According to various embodiments, the processor may be configured to display information of the electronic device on the first display area and control an operation of the electronic device while supplying power to the external device when access authority information received form the external device is not allowable or access authority information is not received from the external device.

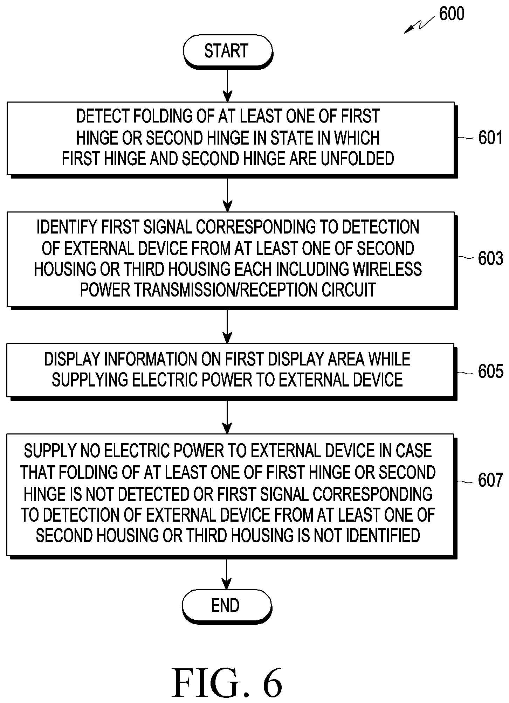

FIG. 6 is a flowchart 600 illustrating an operation of supplying electric power to an external device from an electronic device according to various embodiments. Operations of supplying electric power to the external device may include operation 601 to operation 607. According to an embodiment, at least one of operation 601 to operation 607 may be omitted, the order of some operations may be changed, or another operation may be added. The operations of supplying electric power to the external device may be performed on the electronic device 101 in FIG. 1, the processor 120 in FIG. 1, the electronic device 201 in FIG. 2, the processor 220 in FIG. 2, and the electronic device 201 in FIG. 3A to FIG. 3C, or the electronic device 201 in FIG. 4A to FIG. 4C. The operation of supplying electric power to the external device in FIG. 6 may be described as being performed by the electronic device 201 in FIG. 2, FIG. 3A to FIG. 3C, and FIG. 4A to FIG. 4C, for example.

In operation 601, the electronic device 201 may detect folding of at least one of the first hinge or the second hinge in a first state in which the first hinge 281 and the second hinge 283 are unfolded. According to an embodiment, in the first state in which the first hinge 281 for foldably connecting one side of the first housing 271 having the first display area 261 arranged thereon to one side of the second housing 273 having the second display area 263 arranged thereon and the second hinge 283 for foldably connecting another side of the second housing 273 to one side of the third housing 275 having the third display area 265 arranged thereon are unfolded, the electronic device may detect out-folding or in-folding with respect to at least one of the first hinge 281 or the second hinge 283. The first display area 261 arranged on the first housing 271 may be exposed according to out-folding or in-folding with respect to at least one of the first hinge 281 or the second hinge 283.

According to an embodiment, the electronic device may identify whether, when at least one of the first hinge 281 or the second hinge 283 is folded, an angle of the folding is included within a threshold angle range for power supply of an external device.

In operation 603, the electronic device 201 may identify a first signal corresponding to the detection of the external device from at least one of the second housing 273 or the third housing 275 each including the wireless power transmission/reception circuit 230.

According to an embodiment, if out-folding or/and in-folding of at least one of the first hinge 281 or the second hinge 283 causes the first display area 261 arranged on the first housing 271 to be exposed, the external device 400 for receiving electric power from the electronic device 201 may be placed on the second housing 273 or the third housing 275 each including the wireless power transmission/reception circuit (a coil) 230. The electronic device 201 may receive a first signal corresponding to detection of the external device 400 from the sensor circuit 276 included in the second housing 273 or the third housing 275.

In operation 605, the electronic device 201 may supply electric power to the external device 400 while displaying information on the first display area 261.

According to an embodiment, the electronic device 201 may detect out-folding or in-folding with respect to at least one of the first hinge 281 and the second hinge 283 in a first state in which the first hinge 281 and the second hinge 283 are unfolded, and automatically supply electric power to the external device 400 when a signal corresponding to detection of the external device from at least one of the second housing 273 or the third housing 275.

According to an embodiment, the electronic device 201 may detect folding with respect to at least one of the first hinge 281 and the second hinge 283 in a first state in which the first hinge 281 and the second hinge 283 are unfolded, detect a first signal corresponding to detection of an external device from at least one of the second housing 273 or the third housing 275, and supply electric power to the external device 400 when the out-folding or in-folding state with respect to the at least one hinge and identification of the first signal corresponding to detection of the external device from the at least one housing are maintained for a predetermined time. According to an embodiment, the electronic device 201 may connect communication with the external device 400 and display, on the first display area 261, information of the external device received from the external device 400 to which the communication is connected.

According to an embodiment, the electronic device 201 may connect communication with the external device 400 and display, on the first display area 261, information of the external device received from the external device 400 to which the communication is connected and information of the electronic device.

In operation 607, when unfolding of at least one of the first hinge 281 or the second hinge 283 is detected or a first signal corresponding to detection of an external device 400 from at least one of the second housing 273 or the third housing 275 is not identified while electric power is supplied to the external device, the electronic device 201 may not supply electric power to the external device 400.

According to an embodiment, when unfolding of at least one of the first hinge 281 or the second hinge 283 is detected or the first signal corresponding to detection of an external device 400 from at least one of the second housing 273 or the third housing 275 is not identified while electric power is supplied to the external device 400 in the first charging state (e.g., the first charging state in FIG. 4A), the second charging state (e.g., the second charging state in FIG. 4B), or the third charging state (e.g., the third charging state in FIG. 4C), the electronic device 201 may not supply electric power to the external device 400.

According to an embodiment, when electric power is not supplied to the external device 400, the electronic device 201 may release communication connected to the external device 400.

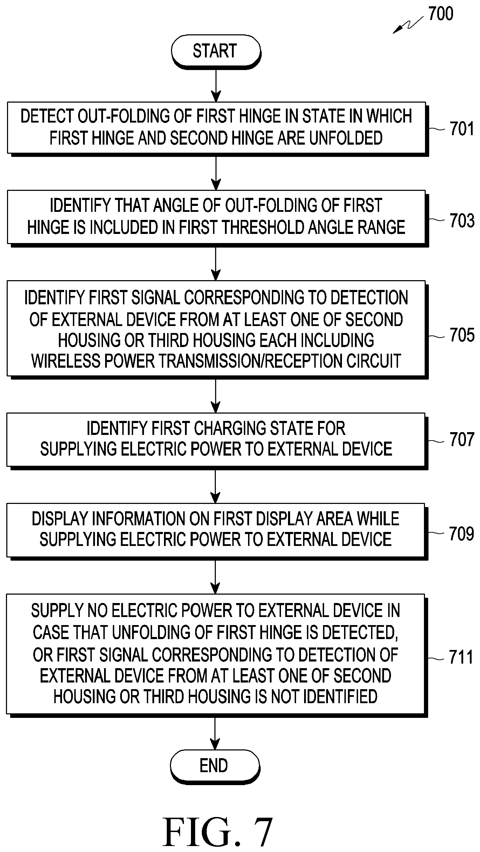

FIG. 7 is a flowchart 700 illustrating an operation of supplying electric power to an external device from an electronic device according to various embodiments. Operations of supplying electric power to the external device may include operation 701 to operation 711. According to an embodiment, at least one of operation 701 to operation 711 may be omitted, the order of some operations may be changed, or another operation may be added. The operations of supplying electric power to the external device may be performed on the electronic device 101 in FIG. 1, the processor 120 in FIG. 1, the electronic device 201 in FIG. 2, the processor 220 in FIG. 2, and the electronic device 201 in FIG. 3A to FIG. 3C, or the electronic device 201 in FIG. 4A to FIG. 4C. The operation of supplying electric power to the external device in FIG. 7 may be described as being performed by the electronic device 201 in FIG. 2, FIG. 3A to FIG. 3C, and FIG. 4A to FIG. 4C, for example.

In operation 701, the electronic device 201 may detect folding of the first hinge 281 in a first state in which the first hinge 281 and the second hinge 283 are unfolded. According to an embodiment, in the first state in which the first hinge 281 for foldably connecting one side of the first housing 271 having the first display area 261 arranged thereon to one side of the second housing 273 having the second display area 263 arranged thereon and the second hinge 283 for foldably connecting another side of the second housing 273 to one side of the third housing 275 having the third display area 265 arranged thereon are unfolded, the electronic device may detect out-folding of the first hinge 281 and identify that the first display area 261 arranged on the first housing 271 is exposed. The out-folding of the first hinge 281 may cause the first display area 261 arranged on the first housing 271 to be exposed.

In operation 703, the electronic device 201 may identify that an angle of the out-folding of the first hinge 281 is included within a first threshold angle range for supplying electric power to an external device.

According to an embodiment, when an angle of the out-folding of the first hinge 281 is included within a first threshold angle range (e.g., 45 degrees or more), the electronic device 201 may prepare to supply electric power with respect to the external device 400.

In operation 705, the electronic device 201 may identify a first signal corresponding to the detection of the external device from at least one of the second housing 273 or the third housing 275 each including the wireless power transmission/reception circuit 230.

According to an embodiment, if out-folding of the first hinge 281 causes the first display area 261 arranged on the first housing 271 to be exposed, the external device 400 for receiving electric power from the electronic device 201 may be placed on the second housing 273 or the third housing 275 each including the wireless power transmission/reception circuit (a coil) 230. The electronic device 201 may receive the first signal corresponding to detection of the external device 400 from the sensor circuit 276 included in the second housing 273 or the third housing 275. In operation 707, the electronic device 201 may identify a first charging state in which electric power may be supplied to the external device 400.

According to an embodiment, when an angle of the out-folding of the first hinge 281 is within a first threshold angle range, and a first signal corresponding to detection of the external device 400 from at least one of the second housing 273 or the third housing 275 is identified, the electronic device 201 may identify a first charging state (e.g., the first charging state in FIG. 4A) in which electric power may be supplied to the external device.

In operation 709, the electronic device 201 may supply electric power to the external device 400 while displaying information on the first display area 261. According to an embodiment, when the first charging state (e.g., the first charging state in FIG. 4A) is identified, the electronic device 201 may supply electric power to the external device 400 placed on at least one of the second housing 273 or the third housing 275 while displaying information of the electronic device and information of the external device on the first display area 261.

According to an embodiment, when the first charging state (e.g., the first charging state in FIG. 4A) is identified and the first charging state is maintained for a predetermined time or more, the electronic device 201 may supply electric power to the external device 400 placed on at least one of the second housing 273 or the third housing 275 while displaying information of the electronic device and information of the external device on the first display area 261.

According to an embodiment, the electronic device 201 may connect communication with the external device 400 and display, on the first display area 261, information of the external device received from the external device 400 to which the communication is connected and information of the electronic device.

In operation 711, when unfolding of the first hinge 281 is detected or a first signal corresponding to detection of the external device 400 from at least one of the second housing 273 or the third housing 275 is not identified while electric power is supplied to the external device 400, the electronic device 201 may not supply electric power to the external device 400.

According to an embodiment, when unfolding of the first hinge 281 is detected or a first signal corresponding to detection of the external device 400 from at least one of the second housing 273 or the third housing 275 is not identified while electric power is supplied to the external device 400 in a first charging state 9e.g., the first charging state in FIG. 4A), the electronic device 201 may not supply electric power to the external device 400.

According to an embodiment, when electric power is not supplied to the external device 400, the electronic device 201 may release communication connected to the external device 400.

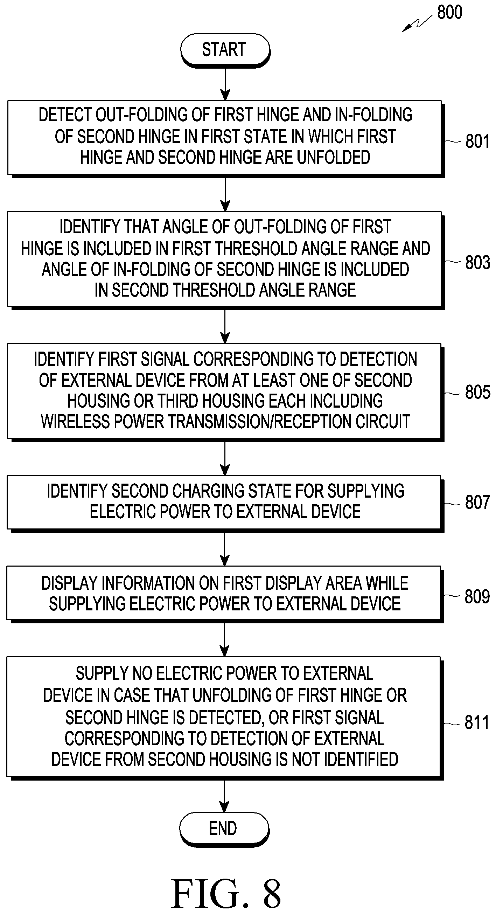

FIG. 8 is a flowchart 800 illustrating an operation of supplying electric power to an external device from an electronic device according to various embodiments. Operations of supplying electric power to the external device may include operation 801 to operation 811. According to an embodiment, at least one of operation 801 to operation 811 may be omitted, the order of some operations may be changed, or another operation may be added. The operations of supplying electric power to the external device may be performed on the electronic device 101 in FIG. 1, the processor 120 in FIG. 1, the electronic device 201 in FIG. 2, the processor 220 in FIG. 2, and the electronic device 201 in FIG. 3A to FIG. 3C, or the electronic device 201 in FIG. 4A to FIG. 4C. The operation of supplying electric power to the external device in FIG. 8 may be described as being performed by the electronic device 201 in FIG. 2, FIG. 3A to FIG. 3C, and FIG. 4A to FIG. 4C, for example.

In operation 801, the electronic device 201 may detect folding of the first hinge 281 or the second hinge 283 in a first state in which the first hinge 281 and the second hinge 283 are unfolded. According to an embodiment, in the first state in which the first hinge 281 for out-foldably connecting one side of the first housing 271 having the first display area 261 arranged thereon to one side of the second housing 273 having the second display area 263 arranged thereon and the second hinge 283 for in-foldably connecting another side of the second housing 273 to one side of the third housing 275 having the third display area 265 arranged thereon are unfolded, the electronic device may detect out-folding of the first hinge 281 and in-folding of the second hinge 283. The out-folding of the first hinge 281 may cause the first display area 261 arranged on the first housing 271 to be exposed and as the in-folding of the second hinge 283 causes the third display area 265 arranged on the third housing 275 and the second display area 263 arranged on the second housing 273 not folded to face each other, the second display area 263 and the third display area 265 may not be exposed.

In operation 803, the electronic device 201 determines that an angle of the out-folding of the first hinge 281 is included within a first threshold angle range for supplying electric power to an external device, and an angle of the in-folding of the second hinge 283 is included within a second threshold angle range for supplying electric power to an external device. According to an embodiment, when the angle of the out-folding of the first hinge 281 is included within the first threshold angle range (e.g., 45 degrees or more) and the angle of the in-folding of the second hinge 283 is included within the second threshold angle range (e.g., 0 degrees to 1820 degrees), the electronic device 201 may prepare to supply electric power with respect to the external device 400.

In operation 805, the electronic device 201 may identify a first signal corresponding to the detection of the external device from the second housing 273 including the wireless power transmission/reception circuit 230.

According to an embodiment, when the out-folding of the first hinge 281 causes the first display area 261 arranged on the first housing 271 to be exposed, and the in-folding of the second hinge 283 causes the third housing 275 to be covered by the second housing 273, the external device 400 for receiving electric power from the electronic device 201 may be placed on the second housing 273 including the wireless transmission/reception circuit (a coil) 230. The electronic device 201 may receive the first signal corresponding to detection of the external device 400 from the sensor circuit 276 included in the second housing 273.

In operation 807, the electronic device 201 may identify a second charging state in which electric power may be supplied of supplying electric power to the external device.

According to an embodiment, when an angle of the out-folding of the first hinge 281 falls within a first threshold angle range, an angle of the in-folding of the second hinge 283 falls within a second threshold angle range, and a first signal corresponding to detection of the external device 400 from the second housing 273 is identified, the electronic device 201 may identify a second charging state (e.g., the second charging state in FIG. 4B) in which electric power may be supplied to the external device.

In operation 809, the electronic device 201 may supply electric power to the external device 400 while displaying information on the first display area 261. According to an embodiment, when the second charging state (e.g., the second charging state in FIG. 4B) is identified, the electronic device 201 may supply electric power to the external device 400 placed on the second housing 273 while displaying information of the electronic device and information of the external device on the first display area 261. According to an embodiment, when the second charging state (e.g., the second charging state in FIG. 4B) is identified and the second charging state is maintained for a predetermined time, the electronic device 201 may supply electric power to the external device 400 placed on the second housing 273 while displaying information of the electronic device and information of the external device on the first display area 261. According to an embodiment, the electronic device 201 may connect communication with the external device 400 and display, on the first display area 261, information of the external device received from the external device 400 to which the communication is connected and information of the electronic device.

In operation 811, when unfolding of the first hinge 281 or the second hinge 283 is detected or a first signal corresponding to detection of an external device 400 from the second housing 273 is not identified while electric power is supplied to the external device, the electronic device 201 may not supply electric power to the external device.

According to an embodiment, unfolding of the first hinge 281 or the second hinge 283 is detected in the second charging state (e.g., the second charging state in FIG. 4B), or a first signal corresponding to detection of an external device 400 from the second housing 273 is not identified, electric power may not be supplied to the external device 400.

According to an embodiment, when electric power is not supplied to the external device, the electronic device 201 may release communication connected to the external device 400.

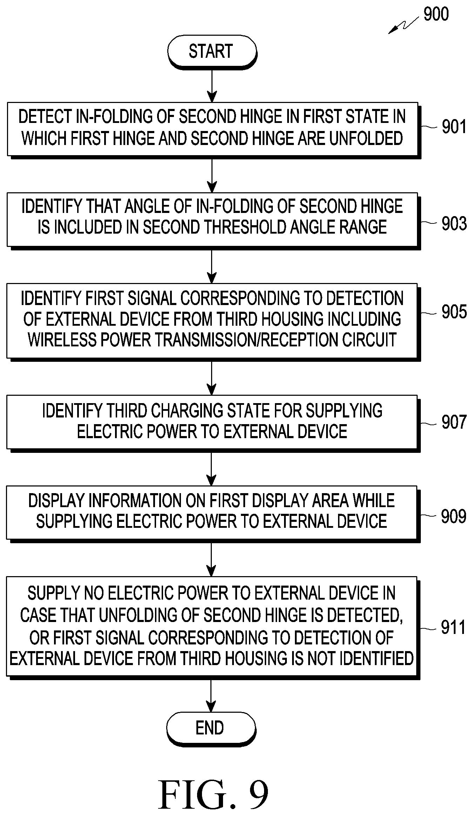

FIG. 9 is a flowchart 900 illustrating an operation of supplying electric power to an external device from an electronic device according to various embodiments. Operations of supplying electric power to the external device may include operation 901 to operation 911. According to an embodiment, at least one of operation 901 to operation 911 may be omitted, the order of some operations may be changed, or another operation may be added. The operations of supplying electric power to the external device may be performed on the electronic device 101 in FIG. 1, the processor 120 in FIG. 1, the electronic device 201 in FIG. 2, the processor 220 in FIG. 2, and the electronic device 201 in FIG. 3A to FIG. 3C, or the electronic device 201 in FIG. 4A to FIG. 4C. The operation of supplying electric power to the external device in FIG. 9 may be described as being performed by the electronic device 201 in FIG. 2, FIG. 3A to FIG. 3C, and FIG. 4A to FIG. 4C, for example.

In operation 901, the electronic device 201 may detects folding of the second hinge 281 in a first state in which the first hinge 281 and the second hinge 283 are unfolded. According to an embodiment, in the first state in which the first hinge 281 for out-foldably connecting one side of the first housing 271 having the first display area 261 arranged thereon to one side of the second housing 273 having the second display area 263 arranged thereon and the second hinge 283 for in-foldably connecting another side of the second housing 273 to one side of the third housing 275 having the third display area 265 arranged thereon are unfolded, the electronic device may detect in-folding of the second hinge 283. The in-folding of the second hinge 283 may cause the first display area 261 arranged on the first housing 271 to be exposed.

In operation 903, the electronic device 201 may identify that an angle of the in-folding of the first hinge 281 is included within a second threshold angle range for supplying electric power to an external device.

According to an embodiment, when an angle of the in-folding of the second hinge 283 is included within a second threshold angle range (e.g., 0 degrees to 180 degrees), the electronic device 201 may prepare to supply electric power with respect to the external device.

In operation 905, the electronic device 201 may identify a first signal corresponding to the detection of the external device from the third housing 275 including the wireless power transmission/reception circuit 230.

According to an embodiment, when the in-folding of the second hinge 283 causes the second housing 273 to be covered by the third housing 275, and only the first display area 261 arranged on the first housing 271 is exposed, the external device 400 for receiving electric power from the electronic device 201 may be placed on the third housing 275 including the wireless power transmission/reception circuit (a coil) 230. The electronic device 201 may receive a first signal corresponding to detection of the external device 400 from the sensor circuit 276 included in the third housing 275.

In operation 907, the electronic device 201 may identify a third charging state in which electric power may be supplied to the external device.

According to an embodiment, when an angle of the in-folding of the second hinge 283 falls within a second threshold angle range, and a first signal corresponding to detection of the external device 400 from the third housing 275 is identified, the electronic device 201 may identify a third charging state (e.g., the third charging state in FIG. 4C) in which electric power may be supplied to the external device 400.

In operation 909, the electronic device 201 may supply electric power to the external device 400 while displaying information on the first display area 261. According to an embodiment, when the third charging state (e.g., the third charging state in FIG. 4C) is identified, the electronic device 201 may supply electric power to the external device 400 placed on the third housing 275 while displaying information of the electronic device and information of the external device on the first display area 261. According to an embodiment, when the third charging state (e.g., the third charging state in FIG. 4C) is identified and the third charging state is maintained for a predetermined time, the electronic device 201 may supply electric power to the external device 400 placed on the third housing 275 while displaying information of the electronic device and information of the external device on the first display area 261.

According to an embodiment, the electronic device 201 may connect communication with the external device 400 and display, on the first display area 261, information of the external device received from the external device 400 to which the communication is connected and information of the electronic device.

In operation 911, when unfolding of the second hinge 283 is detected or a first signal corresponding to detection of an external device 400 from the third housing 275 is not identified while electric power is supplied to the external device, the electronic device 201 may not supply electric power to the external device.

According to an embodiment, when unfolding of the second hinge 283 is detected or a first signal corresponding to detection of the external device 400 from the third housing 275 in the third charging state (e.g., the third charging state in FIG. 4C) is not identified, electric power may be not supplied to the external device 400. According to an embodiment, when electric power is not supplied to the external device 400, the electronic device 201 may release communication connected to the external device 400.

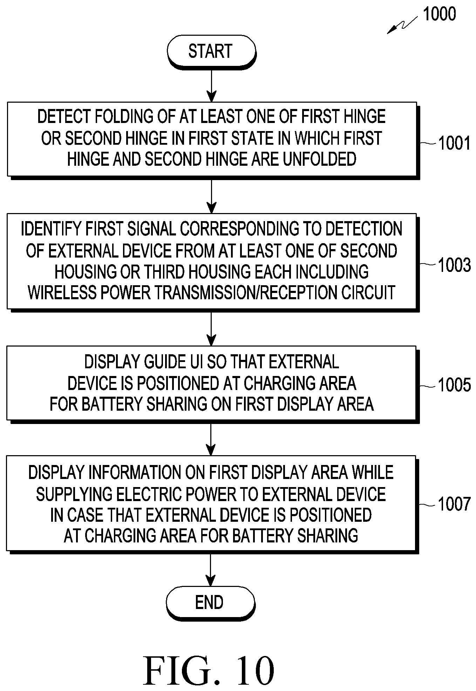

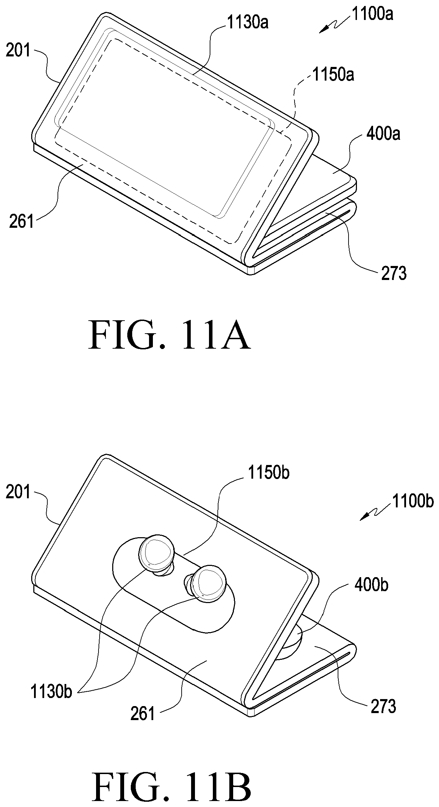

FIG. 10 is a flowchart 1000 illustrating an operation of providing a guide UI for battery sharing in an electronic device according to various embodiments, FIG. 11A and FIG. 11B are views 1100a, 1100b illustrating a guide UI for battery sharing in an electronic device according to various embodiments. Operations of providing the guide UI for battery sharing may include operation 1001 to operation 1007. According to an embodiment, at least one of operation 1001 to operation 1007 may be omitted, the order of some operations may be changed, or another operation may be added. The operations of providing the guide UI for battery sharing may be performed on the electronic device 101 in FIG. 1, the processor 120 in FIG. 1, the electronic device 201 in FIG. 2, the processor 220 in FIG. 2, and the electronic device 201 in FIG. 3A to FIG. 3C, or the electronic device 201 in FIG. 4A to FIG. 4C. The operation of providing the guide UI for battery sharing in FIG. 10 may be described as being performed by the electronic device 201 in FIG. 2, FIG. 3A to FIG. 3C, and FIG. 4A to FIG. 4C, for example.

In operation 1001, the electronic device 201 may detects folding of at least one of the first hinge or the second hinge in a first state in which the first hinge 281 and the second hinge 283 are unfolded. According to an embodiment, in the first state in which the first hinge 281 for foldably connecting one side of the first housing 271 having the first display area 261 arranged thereon to one side of the second housing 273 having the second display area 263 arranged thereon and the second hinge 283 for foldably connecting another side of the second housing 273 to one side of the third housing 275 having the third display area 265 arranged thereon are unfolded, the electronic device may detect folding with respect to at least one of the first hinge 281 or the second hinge 283. The first display area 261 arranged on the first housing 271 may be exposed according to folding with respect to at least one of the first hinge 281 or the second hinge 283.

According to an embodiment, the electronic device may identify whether, when at least one of the first hinge 281 or the second hinge 283 is out-folded or in-folded, an angle of the folding is included within a threshold angle range for power supply of an external device.

In operation 1003, the electronic device 201 may identify a first signal corresponding to the detection of the external device from at least one of the second housing 273 or the third housing 275 each including the wireless power transmission/reception circuit 230.

According to an embodiment, if out-folding or in-folding of at least one of the first hinge 281 or the second hinge 283 causes the first display area 261 arranged on the first housing 271 to be exposed, the external device 400 for receiving electric power from the electronic device 201 may be placed on the second housing 273 or the third housing 275 each including the wireless power transmission/reception circuit (a coil) 230. The electronic device 201 may receive a first signal corresponding to detection of the external device from the sensor circuit 276 of the second housing 273 or the third housing 275.

In operation 1005, the electronic device 201 may display the guide UI on the first display area 261 so that an external device is positioned on a charging area for battery sharing.

According to an embodiment, when at least one of the first hinge 281 or the second hinge 283 is out-folded or in-folded, and a first signal corresponding to detection of the external device 400 from at least one of the second housing 273 and the third housing 275 is identified, the electronic device 201 may display, on the first display area 261, the guide UI with respect to a charging area for battery sharing and a current position of the external device 400 placed on at least one of the second housing 273 or the third housing 275.

Referring to FIG. 11A and FIG. 11B, when out-folding of the first hinge 281 is detected and a first signal corresponding to detection of the external device 400a, 400b from the second housing 273 is identified, the electronic device 201 may provide visual feedback to allow a user to accurately position the external device 400a, 400b on a charging area by displaying, on the first display area 261, the guide UI 1150a, 1150b for the charging area for battery sharing and graphic information 1130a, 1130b indicating a current position of the external device 400a, 400b placed on the second housing 273.

According to an embodiment, the electronic device 201 may identify a current position of the external device placed on at least one of the second housing 273 or the third housing 275, based on the signal corresponding to a position of the external device, received from the sensor circuit 276.

In operation 1007, when the external device is placed on a charging area for battery sharing, the electronic device 201 may supply electric power to the external device 400 while displaying information on the first display area 261.

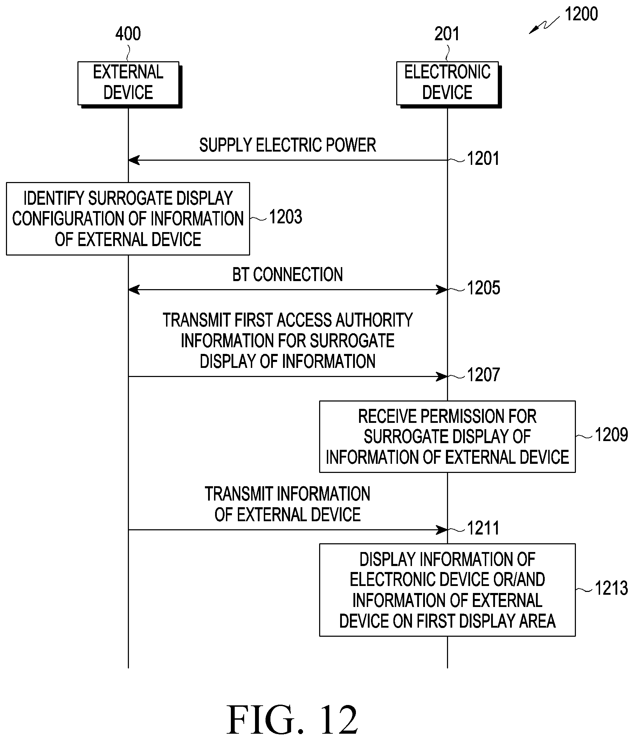

FIG. 12 is a signal flow diagram 1200 illustrating an information displaying operation of an external device while electric power is supplied to the external device from an electronic device according to various embodiments. The operation display operations of the external device may include operation 1201 to operation 1213. According to an embodiment, at least one of operation 1201 to operation 1213 may be omitted, the order of some operations may be changed, or another operation may be added. The information display operations of the external device may be performed on the electronic device 101 in FIG. 1, the processor 120 in FIG. 1, the electronic device 201 in FIG. 2, the processor 220 in FIG. 2, and the electronic device 201 in FIG. 3A to FIG. 3C, or the electronic device 201 in FIG. 4A to FIG. 4C. The operation of providing information display of the external device in FIG. 12 may be described as being performed by the electronic device 201 in FIG. 2, FIG. 3A to FIG. 3C, and FIG. 4A to FIG. 4C, for example.

In operation 1201, the electronic device 201 may supply electric power to the external device 400.

According to an embodiment, the electronic device may supply electric power to the external device 400 placed on the second housing 273 or the third housing 275 in a first charging state (e.g., the first charging state in FIG. 4A), a second charging state (e.g., the second charging state in FIG. 4B), or a third charging state (e.g., the third charging state in FIG. 4C).

In operation 1203, the external device 400 may identify a surrogate displaying configuration for information of the external device.

According to an embodiment, surrogate display of information of the external device may be configured in a wireless battery sharing configuration menu so that information of the external device may be displayed on the electronic device 201 that supplies power to the external device 400.

In operation 1205, the external device 400 may be connected to the electronic device 201 through near field communication (e.g., BT connection).

According to an embodiment, the external device 400 may attempt a near field communication connection (e.g., BT connection) to the electronic device 201 when surrogate display of information of the external device is configured, and may perform near field communication with the electronic device through a pairing operation when information for accepting the near field communication connection is received from the electronic device 201.

In operation 1207, the external device 400 may transmit first access authority information to the electronic device 201.

According to an embodiment, the external device 400 may transmit the first access authority information for allowing surrogate display of information of the external device to the electronic device 201 through near field communication (e.g., BT communication) through which communication with the electronic device 201 has been established.

In operation 1209, the electronic device 201 may receive permission from a user of the electronic device 201 for surrogate display of information of the external device.

According to an embodiment, when the first access authority information for the surrogate display of information of the external device is received from the external device 400, the electronic device 201 may display a pop-up window to allow a user to determine whether to allow the surrogate display of information of the external device.

In operation 1211, the external device 400 may transmit information of the external device to the electronic device 201.

According to an embodiment, when information for accepting surrogate display of information of the external device is received from the electronic device 201, the external device 400 may transmit information (e.g., battery information or notification information) of the external device to the electronic device 201.

In operation 1213, the electronic device 201 may display information of the electronic device and information of the external device on the first display area 261.

According to an embodiment, the electronic device 201 may separately display information (e.g., battery information or notification information) of the electronic device and information (e.g., battery information and notification information) of the external device received from the external device 400 on the first display area 261.

According to an embodiment, the electronic device 201 may display information (e.g., battery information and notification information) of the external device received from the external device 400 on the first display area 261.

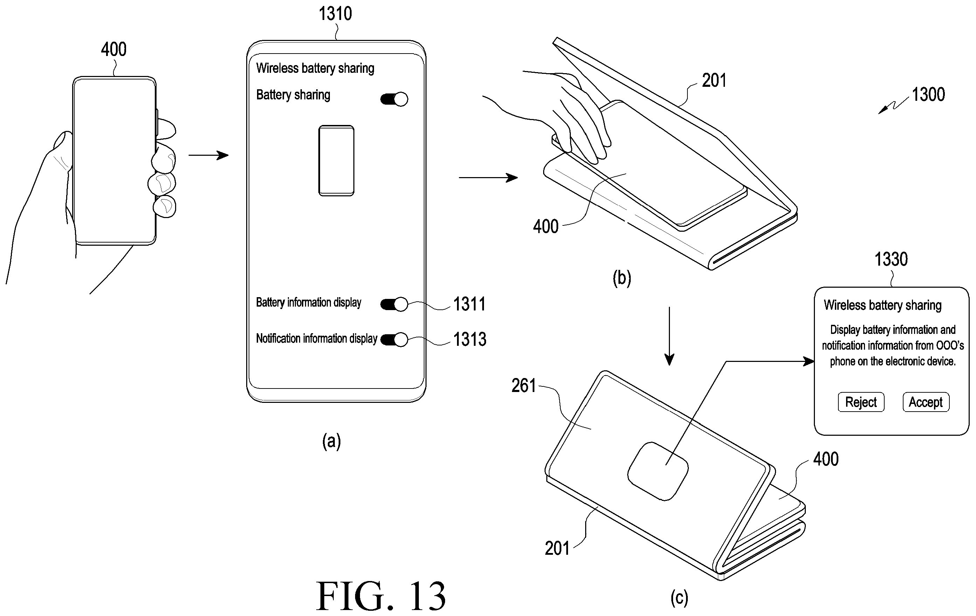

FIG. 13 is a view 1300 illustrating an information displaying operation of an external device while electric power is supplied to the external device from an electronic device according to various embodiments.

As shown in (a) of FIG. 13, surrogate display of information of the external device may be configured by activating battery information display 1311 and notification information display 131, which are information of the external device, in a wireless battery sharing configuration screen 1310 of the external device 400.

As shown in (b) of FIG. 13, when out-folding of the first hinge and in-folding of the second hinge are detected from the electronic device 201 and in a second charging state (e.g., the second charging state in FIG. 4B) in which a first signal corresponding to detection of the external device 400 from the second housing is identified, the electronic device 201 and the external device 400 may be connected through BT communication according to a request of the external device 400.

As shown in (c) of FIG. 13, the electronic device 201 may display a pop-up window 1330 on the first display area 261 to allow a user to determine whether to allow the surrogate display of information of the external device, based on the first access authority information received from the external device 400.

According to an embodiment, when the user permits the surrogate display of information of the external device on the first display area 261, the electronic device 201 may display charging state information of the external device 400 or battery sharing state information of the electronic device 201 and charging state information of the external device 400 on the first display area 261. The electronic device 201 may display, on the first display area 261, an operable button capable of controlling an operation for stopping power supply to an external device or for supplying power to an external device.

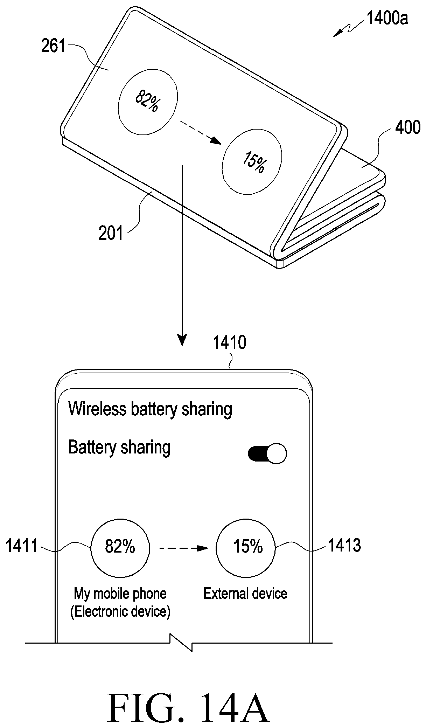

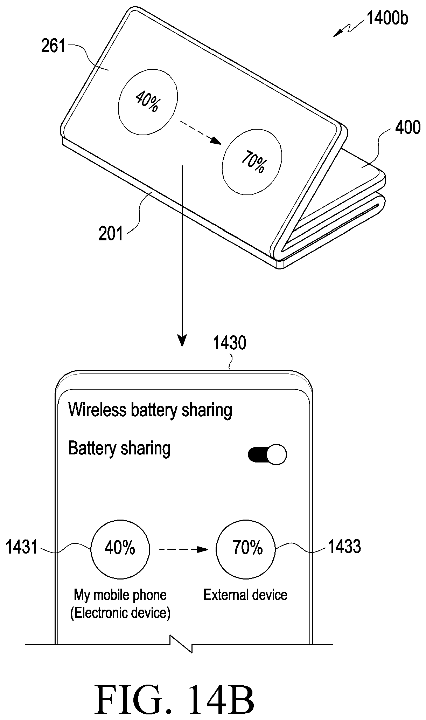

FIG. 14A and FIG. 14B are views 1400a, 1400b illustrating an information displaying operation of an external device while electric power is supplied to the external device from an electronic device according to various embodiments.

FIG. 14A illustrates display of information of the electronic device and information of the external device on the first display area 261 while the electronic device 201 supplies electric power to the external device 400 in a second charging state (e.g., the second charging state in FIG. 2B).

According to an embodiment, the electronic device 201 may separately display battery state information 1411 of the electronic device sharing a battery and battery state information 1413 of the external device being charged on the first display area 261 by using visual information such as a position or a color. The electronic device 201 may display the battery state information 1411 (remaining amount of battery) of the electronic device sharing the battery and the battery state information 1413 (battery charge amount) of the external device being charged together with numbers as well as other visualized diagrams. The electronic device 201 may display that the electronic device 201 is supplying electric power to the external device 400 as graphic information such as an arrow indicating a direction.

According to an embodiment, the electronic device 201 may recognize the operation of supplying power to the external device as the highest priority, and display, on the first display area 261, information of the electronic device and information of the external device together with basic information such as time and date, or only information of the electronic device and information of the external device.

FIG. 14B illustrates display of information of the electronic device and information of the external device on the first display area 261 of the electronic device 201 while the external device 400 supplies electric power to the electronic device 201 in a second charging state (e.g., the second charging state in FIG. 2B).

According to an embodiment, the electronic device 201 may separately display the battery state information 1431 of the electronic device being charged and the battery state information 1433 of the external device sharing a battery on the first display area 261 by using visual information such as a position or a color. The electronic device 201 may display the battery state information 1431 of the electronic device being charged and the battery state information 1433 of the external device sharing a battery together with numbers as well as other visualized diagrams. The electronic device 201 may display that the external device 400 is supplying electric power to the electronic device 201 as graphic information such as an arrow indicating a direction.

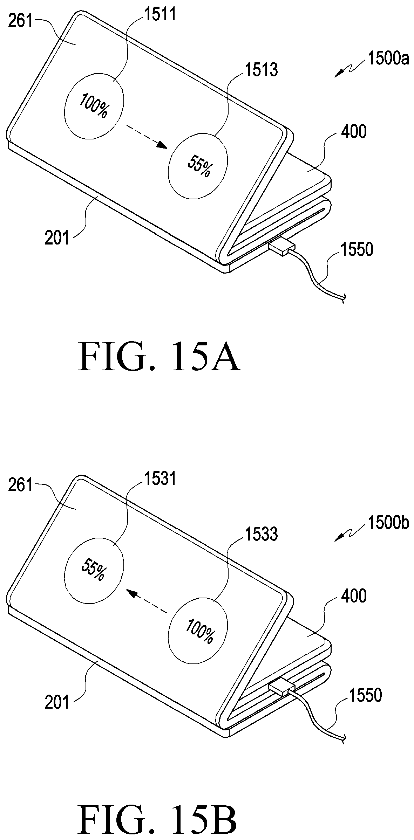

FIG. 15A and FIG. 15B are views 1500a, 1500b illustrating an information displaying operation of an external device while electric power is supplied to the external device from an electronic device according to various embodiments.

FIG. 15A illustrates the electronic device 201 performing charging while receiving electric power from an external charging part (not shown) through a wired connection 1550 and supplying power to the external device 400 while displaying information of the electronic device and information of the external device on the first display area 261.

According to an embodiment, the electronic device 201 which performs charging while receiving electric power from the external charging part (not shown) through the wired connection 1550 may separately display, while receiving electric power from the external device 400, battery state information 1511 of the electronic device sharing a battery and battery state information 1513 of the external device being charged on the first display area 261 by using visual information such as a position or a color. The electronic device 201 may display the battery state information 1511 (remaining amount of battery) of the electronic device sharing the battery and the battery state information 1513 (battery charge amount) of the external device being charged together with numbers as well as other visualized diagrams. The electronic device 201 may display that the electronic device 201 is supplying electric power to the external device 400 as graphic information such as an arrow indicating a direction.

According to an embodiment, while performing charging and receiving electric power from an external charging part (not shown) through a wired connection 1550 and supplying power to the external device 400, the electronic device 201 may supply electric power to the external device 400 and display information of the electronic device and information of the external device on the first display area 261 even when the wired connection 1550 is released. When the wired connection 1550 is released, the electronic device may display the release of the wired connection on the first display area 261 by using vibration or a pop-up window.

FIG. 15B illustrates the external device 400 performing charging while receiving electric power from an external charging part (not shown) through the wired connection 1550 and supplying power to the electronic device 201 while displaying information of the electronic device and information of the external device on the first display area 261 of the electronic device 201.

According to an embodiment, the external device 400 performing charging while receiving electric power from an external charging part (not shown) through the wired connection 1550 may transmit information of the electronic device to the electronic device 201 while supplying electric power to the electronic device 201 to display information of the electronic device and information of the external device on the first display area 261 of the electronic device 201.

According to an embodiment, the electronic device 201 may separately display the battery state information 1531 of the electronic device being charged and the battery state information 1533 of the external device sharing a battery on the first display area 261 by using visual information such as a position or a color. The electronic device 201 may display the battery state information 1531 of the electronic device being charged and the battery state information 1533 of the external device sharing a battery together with numbers as well as other visualized diagrams. The electronic device 201 may display that the external device 400 is supplying electric power to the electronic device 201 as graphic information such as an arrow indicating a direction.

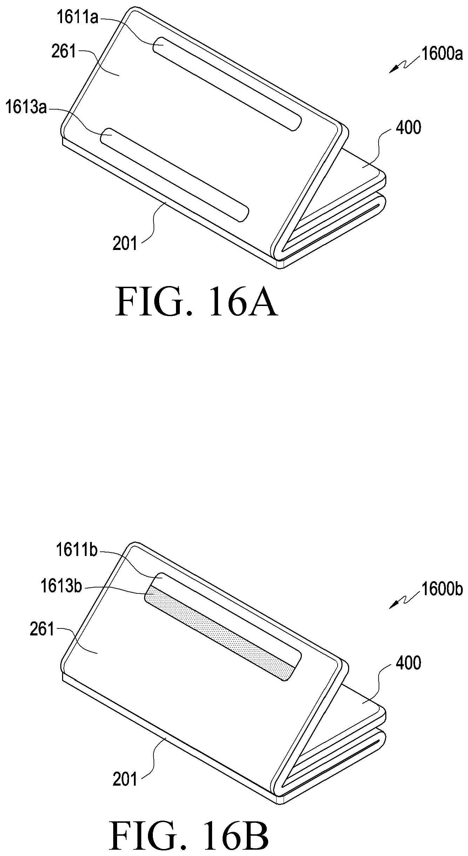

FIG. 16A and FIG. 16B are views 1600a, 1600c illustrating an information displaying operation of an external device while electric power is supplied to the external device from an electronic device according to various embodiments.

Referring to FIG. 16A, when the electronic device 201 displays notification information of the electronic device and notification information of the external device on the first display area 261 while supplying electric power to the external device 400, it is possible to distinguish by displaying the notification information of the electronic device on a first pop-up window 1611a positioned at the upper side and the notification information of the external device on a second pop-up window 1613a positioned at the lower side.

Referring to FIG. 16B, when both the notification information of the electronic device and the notification information of the external device are displayed on the first pop-up window 1611b and the second pop-up window 1613b, respectively, in the first display area 261 while the electronic device 201 supplies electric power to the external device 400, the notification information of the electronic device and the notification information of the external device may be separately displayed in different colors.

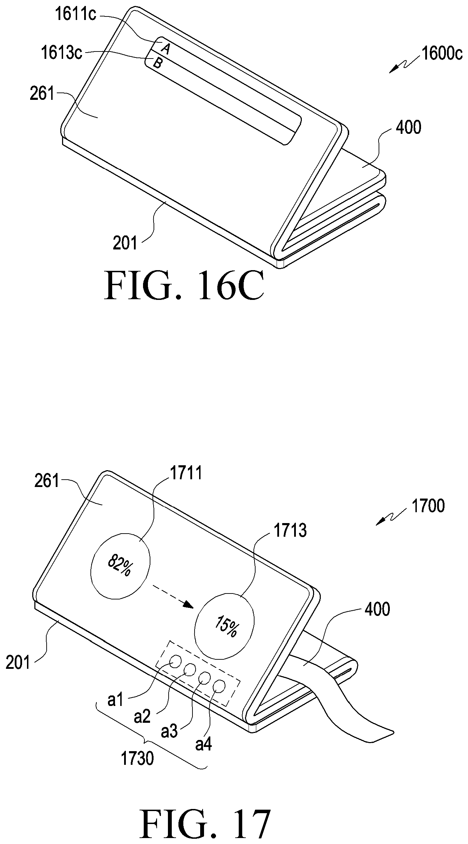

Referring to FIG. 16C, when both the notification information of the electronic device and the notification information of the external device are displayed on the first pop-up window 1611b and the second pop-up window 1613b, respectively, in the first display area 261 while the electronic device 201 supplies electric power to the external device 400, information indicating the electronic device (e.g., a user name (A)) and information indicating the external device (e.g., a user name (B)) in each pop-up window may be displayed to distinguish the information.

FIG. 17 is a view 1700 illustrating an information displaying operation of an external device while electric power is supplied to the external device from an electronic device according to various embodiments.

FIG. 17 illustrates display of information of the electronic device and information of the external device on the first display area 261 while the electronic device 201 supplies electric power to the external device 400.

According to an embodiment, the electronic device 201 may separately display battery state information 1711 of the electronic device sharing a battery and battery state information 1713 of the external device being charged on the first display area 261 by using visual information such as a position or a color. In addition, when receiving specific information 1730 most recently measured and stored by the external device from the external device 400 according to configuration of the external device 400 (a wearable external device), the electronic device 201 may display, on the first display area 261, the battery state information 1711 of the electronic device sharing a battery and the battery state information 1713 of the external device being charged together with the specific information 1730. The specific information 1730 may include, for example, heart rate information a1, stress information a2, sleep index information a3, and blood pressure index information a4.

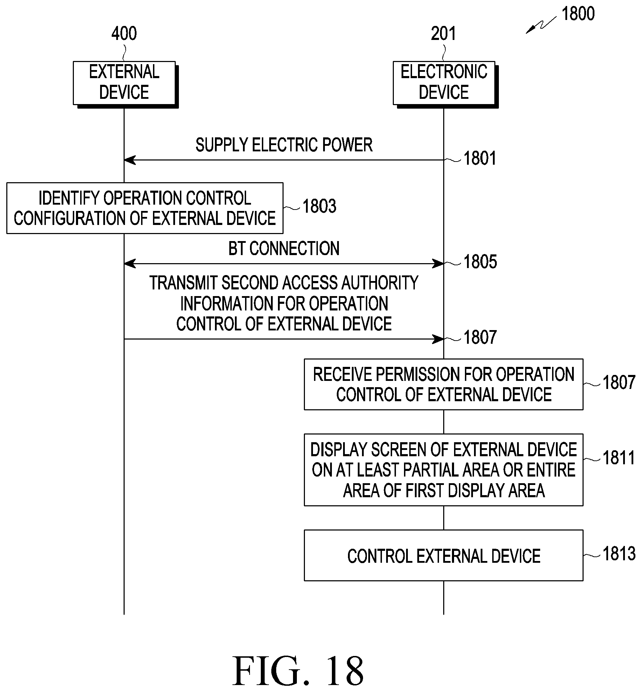

FIG. 18 is a signal flow diagram 1800 illustrating a control operation of an external device while electric power is supplied to the external device from an electronic device according to various embodiments. The operation display operations of the external device may include operation 1801 to operation 1813. According to an embodiment, at least one of operation 1801 to operation 1813 may be omitted, the order of some operations may be changed, or another operation may be added. The operation display operations of the external device may be performed on the electronic device 101 in FIG. 1, the processor 120 in FIG. 1, the electronic device 201 in FIG. 2, the processor 220 in FIG. 2, and the electronic device 201 in FIG. 3A to FIG. 3C, and/or the electronic device 201 in FIG. 4A to FIG. 4C. The control operations of the external device in FIG. 18 may be described as being performed by the electronic device 201 in FIG. 2, FIG. 3A to FIG. 3C, and FIG. 4A to FIG. 4C, for example.

In operation 1801, the electronic device 201 may supply electric power to the external device 400.

According to an embodiment, the electronic device may supply electric power to the external device 400 placed on the second housing 273 or the third housing 275 in a first charging state (e.g., the first charging state in FIG. 4A), a second charging state (e.g., the second charging state in FIG. 4B), or a third charging state (e.g., the third charging state in FIG. 4C).

In operation 1803, the external device 400 may identify control configuration of the external device.

According to an embodiment, operation control of the external device may be configured in a wireless battery sharing configuration menu of the external device so that a screen of the external device is displayed on the electronic device 201 supplying electric power to the external device 400 so as to control operations of the external device.

In operation 1805, the external device 400 may be connected to the electronic device 201 through near field communication (e.g., BT communication).

According to an embodiment, the external device 400 may attempt a near field communication (e.g., BT communication) connection to the electronic device 201 when control of an operation of the external device is configured, and may perform near field communication with the electronic device through a pairing operation when information for accepting the near field communication connection is received from the electronic device 201.

In operation 1807, the external device 400 may transmit second access authority information to the electronic device 201.

According to an embodiment, the external device 400 may transmit the second access authority information for allowing control of information of the external device to the electronic device 201 through near field communication (e.g., BT communication) through which communication with the electronic device 201 has been established.

In operation 1809, the electronic device 201 may receive permission from a user of the electronic device 201 for control of an operation of the external device.

According to an embodiment, when the second access authority information for the operation control of the external device is received from the external device 400, the electronic device 201 may display a pop-up window to allow a user to determine whether to allow the operation control of the external device.

According to an embodiment, the second access authority information may include the first access authority information for surrogate display of information of the external device.

In operation 1811, the electronic device 201 may display the screen of the external device in at least a partial area or the entire area of the first display area 261.

According to an embodiment, when information for accepting the operation control of the external device is received from the electronic device 201, the external device 400 may transmit screen information for the operation control of the external device to the electronic device 201.

According to an embodiment, the electronic device 201 may display the screen of the external device and the screen of the electronic device on the first display area 261.

According to an embodiment, the electronic device 201 may display the screen of the external device in the entire area of the first display area 261.

In operation 1813, the electronic device 201 may control the external device 400.

According to an embodiment, the electronic device 201 may display the screen of the external device on the display area 261 and control the external device by directly manipulating the screen of the external device. For example, while power is supplied to an external device that is outputting audio data, the volume of the audio data is changed through the screen of the external device displayed on the first display area, or other audio data is selected to be output through a speaker of the external device or a speaker of the electronic device.

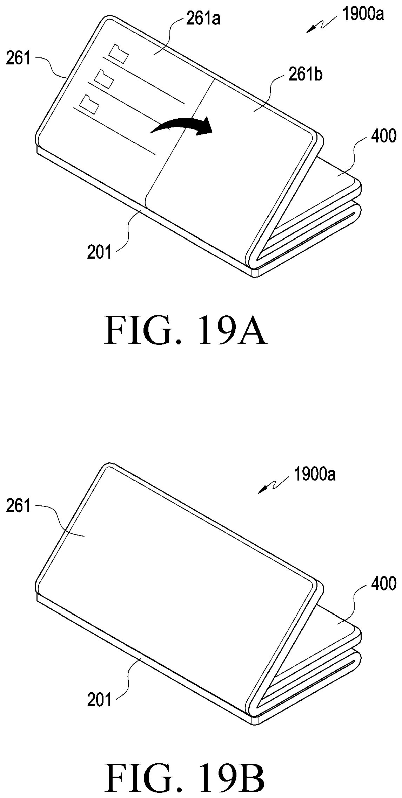

FIG. 19A and FIG. 19B are views 1900a, 1900b illustrating a control operation of an external device while electric power is supplied to the external device from an electronic device according to various embodiments.

Referring to FIG. 19A, the electronic device 210 having accepted the second access authority for the operation control of the external device received from the external device 400 may divide the first display area 261 into a first area 261a and a second area 261b, display a screen of the external device 400 on the first area 261a by using a mirroring function, display a screen of the electronic device 201 on the second area 261b, and share the screen of the external device and a screen of the electronic device. In addition, the electronic device 201 may control the screen of the external device displayed on the first area 261a to display files of the external device and in response to a user gesture (e.g., dragging) for moving at least one of files of the external device displayed on the first area 261a to the second area 261b, move the at least one file to the electronic device and store same.

Referring to FIG. 19B, the electronic device 210 having accepted the second access authority for the operation control of the external device received from the external device 400 may control the external device 400 while displaying the screen of the external device 400 on the entire area of the first display area 261 by mirroring. The electronic device 201 may execute an application of the external device or retrieve data through the screen of the external device 400 displayed on the entire area of the first display area 261.

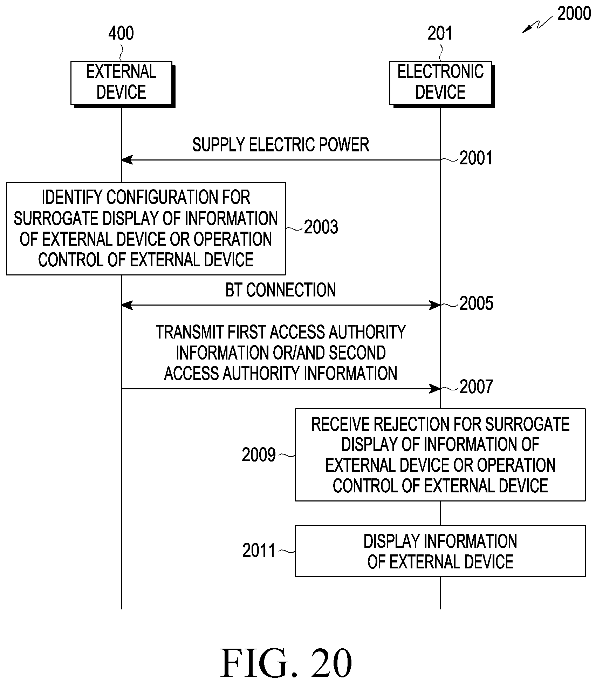

FIG. 20 is a flowchart 2000 illustrating a control operation of an external device while electric power is supplied to the external device from an electronic device according to various embodiments. The control operations of the external device may include operation 2001 to operation 2011. According to an embodiment, at least one of operation 2001 to operation 2011 may be omitted, the order of some operations may be changed, or another operation may be added. The control operations of the external device may be performed on the electronic device 101 in FIG. 1, the processor 120 in FIG. 1, the electronic device 201 in FIG. 2, the processor 220 in FIG. 2, and the electronic device 201 in FIG. 3A to FIG. 3C, and/or the electronic device 201 in FIG. 4A to FIG. 4C. The control operations of the external device in FIG. 20 may be described as being performed by the electronic device 201 in FIG. 2, FIG. 3A to FIG. 3C, and FIG. 4A to FIG. 4C, for example.

In operation 2001, the electronic device 201 may supply electric power to the external device 400.

According to an embodiment, the electronic device may supply electric power to the external device 400 placed on the second housing 273 or the third housing 275 in a first charging state (e.g., the first charging state in FIG. 4A), a second charging state (e.g., the second charging state in FIG. 4B), or a third charging state (e.g., the third charging state in FIG. 4C).

In operation 2003, the external device 400 may identify configuration for surrogate display of information of the external device or control of an operation of the external device.

According to an embodiment, surrogate display of information of the external device or control of an operation of the external device may be configured in a wireless battery sharing configuration menu so that information of the external device may be displayed on the electronic device 201 that supplies power to the external device 400 or an operation of the external device may be controlled by the electronic device 201.

In operation 2005, the external device 400 may be connected to the electronic device 201 through near field communication (e.g., BT communication).

According to an embodiment, the external device 400 may attempt near field communication connection to the electronic device 201 when surrogate display of information of the external device or control of an operation of the external device are configured, and may perform near field communication with the electronic device through a pairing operation when information for accepting the near field communication (e.g., BT communication) connection is received from the electronic device 201.

In operation 2007, the external device 400 may transmit the first access authority information for surrogate display of information of the external device or the second access authority information for control of an operation of the external device to the electronic device 201.

According to an embodiment, the external device 400 may transmit the first access authority information for surrogate display of information of the external device or the second access authority information for control of an operation of the external device to the electronic device 201 through near field communication (e.g., BT communication) through which communication with the electronic device 201 has been established.

In operation 2009, the electronic device 201 may receive rejection from a user of the electronic device 201 for surrogate display of information of the external device or control of an operation of the external device.

According to an embodiment, when the first access authority information for surrogate display of information of the external device or the second access authority information for control of an operation of the external device is received from the external device 400, the electronic device 201 may display a pop-up window to allow a user to select permission or rejection of the surrogate display of information of the external device or the control of an operation of the external device.

In operation 2011, the electronic device 201 may control an operation of the electronic device while displaying only information of the electronic device on the first display area 261.

According to an embodiment, when near field communication (e.g., BT communication) is requested from the external device 400 and the near field communication is rejected by the user of the electronic device, the electronic device 201 may display only information of the electronic device on the first display area 261 and control an operation of the electronic device.

According to an embodiment, when the first access authority information or the second access authority information is not received from the external device 400, the electronic device 201 may display only information of the electronic device on the first display area 261 and control an operation of the electronic device while electric power is applied to the external device.

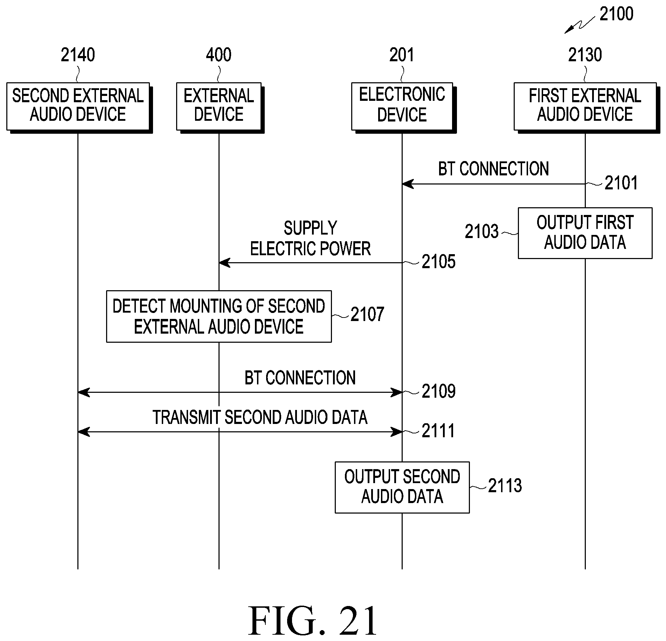

FIG. 21 is a flowchart 2100 illustrating a control operation of an external device while electric power is supplied to the external device from an electronic device according to various embodiments. The control operations of the external device may include operation 2101 to operation 2113. According to an embodiment, at least one of operation 2101 to operation 2113 may be omitted, the order of some operations may be changed, or another operation may be added. The control operations of the external device may be performed on the electronic device 101 in FIG. 1, the processor 120 in FIG. 1, the electronic device 201 in FIG. 2, the processor 220 in FIG. 2, and the electronic device 201 in FIG. 3A to FIG. 3C, and/or the electronic device 201 in FIG. 4A to FIG. 4C. The control operations of the external device in FIG. 21 may be described as being performed by the electronic device 201 in FIG. 2, FIG. 3A to FIG. 3C, and FIG. 4A to FIG. 4C, for example.

In operation 2101, the electronic device 201 may be connected to a first external audio device 2130 (e.g., a pair of ear buds) through near field communication (e.g., BT communication).

In operation 2103, the electronic device 201 may transmit first audio data to the first external audio device 2130 to which near field communication (e.g., BT communication) is connected and output first audio data through the first external audio device 2130.

In operation 2105, the electronic device 201 may supply electric power to the external device 400 while outputting the first audio data through the first external audio device 2130.

According to an embodiment, the electronic device 210 may supply electric power to the external device 400 placed on the second housing 273 or the third housing 275 while outputting the first audio data to the first external audio device 2130 when a first charging state (e.g., the first charging state in FIG. 4A), a second charging state (e.g., the second charging state in FIG. 4B), or a third charging state (e.g., the third charging state in FIG. 4C) is identified.

In operation 2107, the external device 400 may detect connection of a second external audio device 2140 (e.g., a pair of ear buds) while receiving electric power from the electronic device 201.

According to an embodiment, in case that the external device 400 is a charging case, mounting of the second external audio device 2140 to the charging case may be detected.

According to an embodiment, the second external audio device 2410 may be connected to another electronic device (not shown) through near field communication (e.g., BT communication) to output second audio data received from the another electronic device.

In operation 2109, the electronic device 201 may be connected to the second external audio device 2140 connected to the external device 400 through near field communication (e.g., the BT communication).

In operation 2111, the second external audio device 2140 may transmit the second audio data being output from the second external audio device 2140 to the electronic device 201.

In operation 2113, the electronic device 201 may output the second audio data received from the second external audio device 2140 through a speaker of the electronic device.

According to an embodiment, the electronic device 201 may output the second audio data received from the second external audio device 2410 through a speaker of the electronic device 201 while outputting the first audio data through the first external audio device 2130 to which near field communication (e.g., BT communication) is connected.

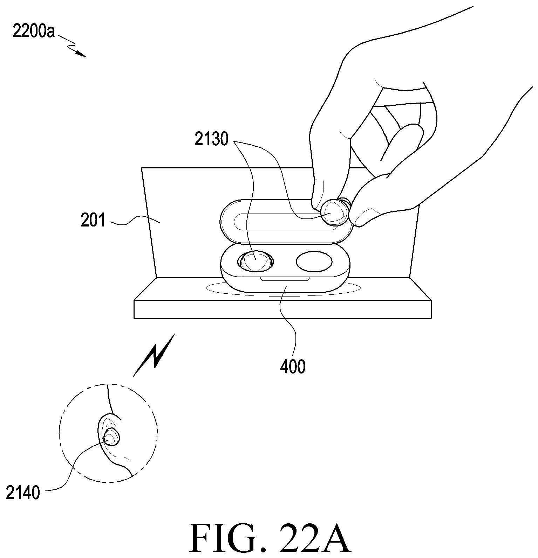

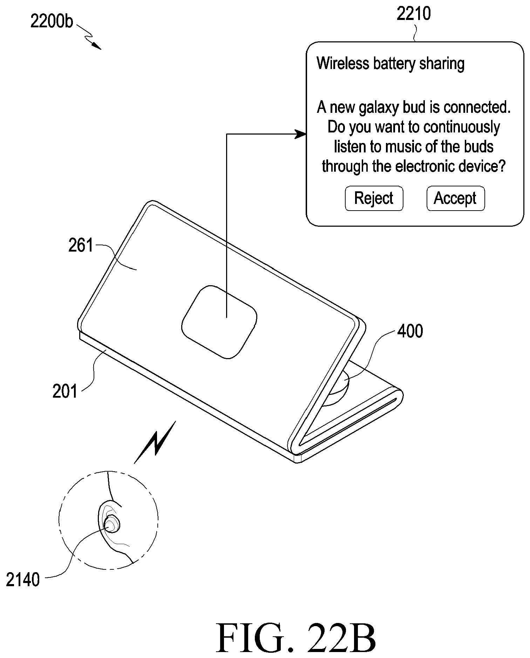

FIG. 22A and FIG. 22B are views 2200a, 2200b illustrating a control operation of an external device while electric power is supplied to the external device from an electronic device according to various embodiments.

Referring to FIG. 22A, in a state in which BT communication with the first external audio device 2140 is connected, the electronic device 201 may transmit the first audio data to the external audio device 2140 to output the first audio data through the first external audio device 2410. The electronic device 210 may identify a first charging state while performing BT communication with the first external audio device 2140 and supply electric power to the charging case 400 which is an external device placed on the second housing. The second external audio device 2130 which is connected to another electronic device (not shown) through BT communication to output the second audio data received from the another electronic device may be mounted on the charging case 400 while the charging case 400 receives electric power from the electronic device 201.

As shown in FIG. 22B, when connected to the second external audio device 2130 mounted to the charging case 400 through BT communication, the electronic device 201 may notify the connection state of the second external audio device on the first display area 261 and may display a pop-up window 2210 for allowing a user to select whether to continuously output the second audio data through the electronic device 201, which is being output from the second external audio device 2130.

In case that the user of the electronic device 201 agrees that the electronic device 201 continuously output the second audio data, the electronic device 201 may output the second audio data being output from the second external audio device 2130 through a speaker of the electronic device 201 while transmitting the first audio data to the first external audio device 2140 to be output.

According to an embodiment, the electronic device 201 may display the first audio information and the second audio information on the first display area 261.

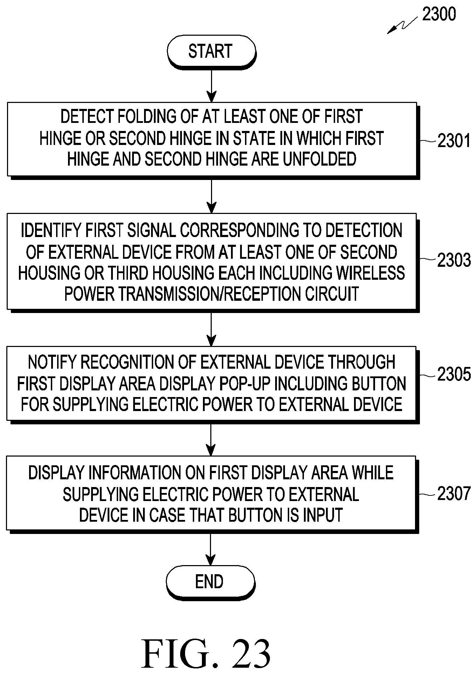

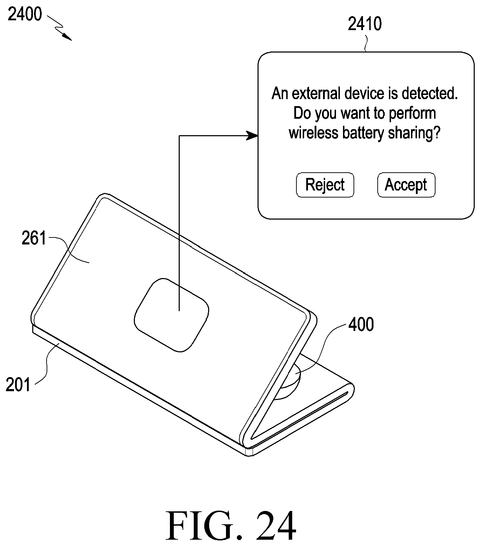

FIG. 23 is a flowchart 2300 illustrating an operation of supplying electric power to an external device from an electronic device according to various embodiments, and FIG. 24 is a view 2400 illustrating an operation of supplying electric power to an external device from an electronic device according to various embodiments. Operations of supplying electric power to the external device may include operation 2301 to operation 2307. According to an embodiment, at least one of operation 2301 to operation 2307 may be omitted, the order of some operations may be changed, or another operation may be added. The operations of supplying electric power to the external device may be performed on the electronic device 101 in FIG. 1, the processor 120 in FIG. 1, the electronic device 201 in FIG. 2, the processor 220 in FIG. 2, and/or the electronic device 201 in FIG. 3A to FIG. 3C. The operation of supplying electric power to the external device in FIG. 23 may be described as being performed by the electronic device 201 in FIG. 2, and FIG. 3A to FIG. 3C, for example.

In operation 2301, the electronic device 201 may detect folding of at least one of the first hinge or the second hinge in a first state in which the first hinge 281 and the second hinge 283 are unfolded. According to an embodiment, in the first state in which the first hinge 281 for foldably connecting one side of the first housing 271 having the first display area 261 arranged thereon to one side of the second housing 273 having the second display area 263 arranged thereon and the second hinge 283 for foldably connecting another side of the second housing 273 to one side of the third housing 275 having the third display area 265 arranged thereon are unfolded, the electronic device may detect folding with respect to at least one of the first hinge 281 or the second hinge 283. The first display area 261 may be exposed according to folding of at least one of the first hinge 281 or the second hinge 283.

According to an embodiment, the electronic device may identify whether, when at least one of the first hinge 281 or the second hinge 283 is out-folded or in-folded, an angle of the folding is included within a threshold angle range for a wireless battery sharing mode.

In operation 2303, the electronic device 201 may identify a first signal corresponding to the detection of the external device from at least one of the second housing 273 or the third housing 275 each including the wireless power transmission/reception circuit 230.

According to an embodiment, if out-folding or in-folding of at least one of the first hinge 281 or the second hinge 283 causes the first display area 261 arranged on the first housing 271 to be exposed, the external device 400 for receiving electric power from the electronic device 201 may be placed on the second housing 273 or the third housing 275 each including the wireless power transmission/reception circuit (a coil) 230. The electronic device 201 may receive a first signal corresponding to detection of the external device 400 from the sensor circuit 276 included in the second housing 273 or the third housing 275. In operation 2305, the electronic device 201 may notify recognition of the external device on the first display area and display a pop-up window including a button for supplying electric power to the external device.

As shown in FIG. 24, when a second charging state (e.g., the second charging state in FIG. 4B) is identified, the electronic device 201 may notify recognition of the external device 400 on the first display area 261, based on a first signal corresponding to detection of the external device from the second housing 273, and display a pop-up window 2410 including a button for supplying electric power to the external device.

In operation 2307, when a button for supplying electric power to the external device is input by the user of the electronic device 201 through the pop-up window, the electronic device 201 may supply electric power to the external device 400 while displaying information on the first display area 261.

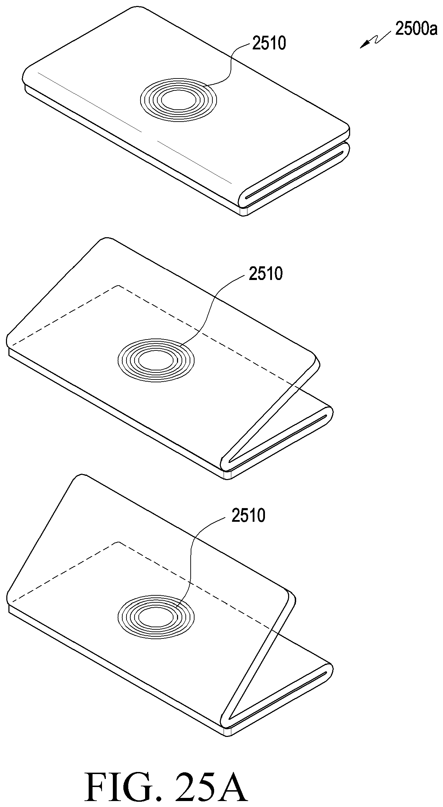

FIG. 25A to FIG. 25C are views 2500a to 2500c illustrating a control operation of an external device while electric power is supplied to the external device from an electronic device according to various embodiments.

Referring to FIG. 25A, after electric power supply with respect to an external device is configured in a menu, when the first hinge is out-folded from unfolding, the electronic device 201 may stereoscopically display a UI 2510 indicating the wireless power transmission/reception circuit 230 from a time point when the out-folding operation of the hinge starts to a time point when the same ends.

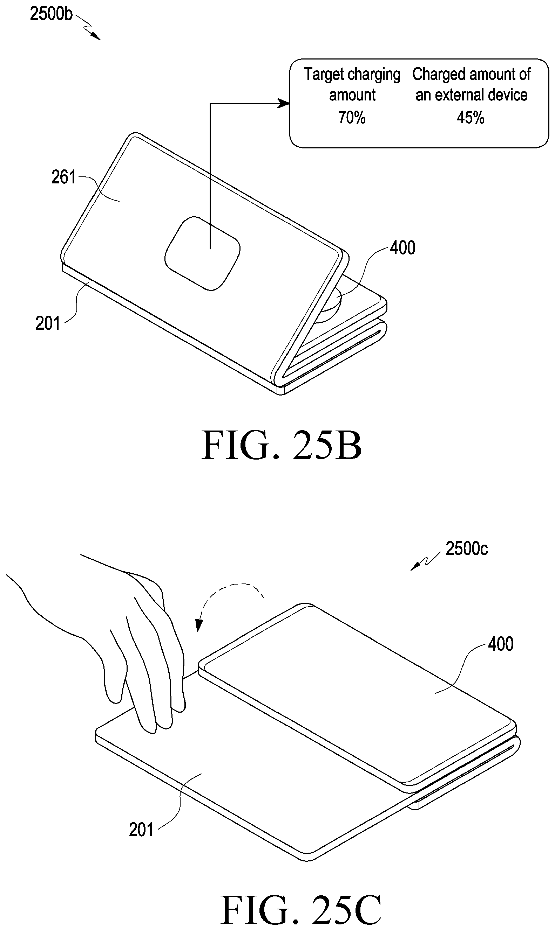

Referring to FIG. 25B, the electronic device 201 may configure a battery amount to be shared with the external device 400 in advance while electric power is supplied to the external device 400, and display the preconfigured battery amount and a battery amount of the external device currently being charged on the first display area 261. The electronic device 201 may notify completion of charging or may not supply electric power to the external device when the external device 400 is fully charged with the preconfigured battery amount.

Referring to FIG. 25C, the electronic device 201 may release connection with the external device 400 when unfolding of the first hinge is detected while the external device 400 is charged in a second charging state (e.g., the charging state in FIG. 4B). After released from the connection with the electronic device 201, the external device 400 may display a stand-by screen of the external device 400 or may continuously display information of the external device having been displayed on the first display area 261 of the electronic device before the connection release from the electronic device 201.

According to various embodiments, a method for sharing a battery in an electronic device may include, in a first state in which a first hinge (e.g., the first hinge 281 in FIG. 3B) connecting one side of a first housing (e.g., the first housing 271 in FIG. 3B) having a first display area arranged thereon to one side of a second housing (e.g., the second housing 273 in FIG. 3B) having a second display area arranged thereon to be foldable and a second hinge (e.g., the second hinge 283 in FIG. 3B) connecting another side of the second housing to one side of a third housing having a third display area arranged thereon to be foldable are unfolded, an operation of detecting folding of at least one of the first hinge or the second hinge, an operation of identifying a first signal corresponding to detection of the external device (e.g., the external device 400 in FIG. 4B to FIG. 4C) from at least one of the second housing or the third housing each including a wireless power transmission/reception circuit (e.g., the wireless power transmission/reception circuit 230 in FIG. 2), and an operation of supplying electric power to an external device while displaying information on the first display area.

According to various embodiments, an operation of supplying no electric power to the external device in case that at least one of the first hinge or the second hinge is unfolded or the first signal is identified from at least one of the second housing or the third housing in the wireless battery sharing mode may be further included.

According to various embodiments, an operation of detecting out-folding of the first hinge in the first state and supplying electric power to the external device in a first charging state in which the first signal is identified from at least one of the second housing or the third housing may be further included.

According to various embodiments, an operation of detecting out-folding of the first hinge in the first state, detecting in-folding of the second hinge, and supplying electric power to the external device in a second charging state in which the first signal is identified from the second housing may be further included.

According to various embodiments, an operation of detecting in-folding of the second hinge in the first state and supplying electric power to the external device in a third charging state in which the first signal is identified from the third housing may be further included.

According to various embodiments, an operation of displaying a guide UI on the first display area so that the external device is placed on a charging area for wireless battery sharing in at least one of the second housing or the third housing may be further included.

According to various embodiments, an operation of separately displaying information of the external device and information of the electronic device on the first display area while supplying electric power to the external device, based on first access authority information received from the external device, may be further included.

According to various embodiments, an operation of separately displaying charging state information of the external device and battery sharing information of the electronic device on the first display area may be further included.

According to various embodiments, an operation of displaying a screen of the external device on at least a portion or the entirety of the first display area while supplying electric power to the external device, based on a second access authority information received from the external device and controlling data displayed on a screen of the external device so that the external device performs an operation corresponding to the control of the data may be further included.

According to various embodiments, an operation of displaying information of the electronic device on the first display area and controlling an operation of the electronic device while supplying power to the external device when access authority information received from the external device is not allowable or access authority information is not received from the external device may be further included.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

A recording medium may store instructions which, when executed by the at least one processor, cause at least one processor to perform at least one operation, and the at least one operation may include, in a first state in which a first hinge connecting one side of a first housing having a first display area arranged thereon to one side of a second housing having a second display area arranged thereon to be foldable and a second hinge connecting another side of the second housing to one side of a third housing having a third display area arranged thereon to be foldable are unfolded, an operation of detecting folding of at least one of the first hinge or the second hinge, an operation of identifying a first signal corresponding to detection of the external device from at least one of the second housing or the third housing each including a wireless power transmission/reception circuit, and an operation of supplying electric power to an external device while displaying information on the first display area. The embodiments of the disclosure disclosed in the specification and the drawings are merely presented as specific examples to easily explain the technical features and help understanding of the embodiments of the disclosure and are not intended to limit the scope of the embodiments of the disclosure. Therefore, the scope of the various embodiments disclosed herein should be construed as encompassing all changes or modifications derived from the technical ideas of the various embodiments disclosed herein in addition to the embodiments disclosed herein.

## Claims

1. An electronic device (101, 201) comprising:
a first housing (271);
a second housing (273);
a third housing (275);
an out-foldable hinge (281) connected with the first housing (271) and the second housing (273);
an in-foldable hinge (283) connected with the second housing (273) and the third housing (275);
a wireless charging circuit accommodated in the third housing;
a display (160, 260) including a first display portion (261) disposed on the first housing (271), a second display portion (263) disposed on the second housing (273), and a third display portion (265) disposed on the third housing (275); and
a processor (120, 220) configured to:
while the out-foldable hinge (281) is at least partially folded and the in-foldable hinge (283) is fully unfolded,
identify an external device disposed on a portion of the third housing corresponding to the wireless charging circuit,
display a content indicating a wireless charging is being performed via the first display portion (261), and
perform the wireless charging with respect to the external device.

2. The electronic device (101, 201) of claim 1, wherein the processor (120, 220) is configured to:
while the out-foldable hinge is at least partially folded and the in-foldable hinge is fully unfolded,
display a window including a button for determining whether to perform the wireless charging.

3. The electronic device (101, 201) of claim 1 or claim 2, wherein the electronic device further includes a battery (189),
wherein the processor (120, 220) is configured to:
while the out-foldable hinge is at least partially folded and the in-foldable hinge is fully unfolded and the wireless charging is being performed, display information on a remaining amount of the battery (189) of the electronic device (101, 201).

4. The electronic device (101, 201) of any one of claim 1 to claim 3, wherein the processor (120, 220) is configured to:
when the out-foldable hinge is at least partially folded and the in-foldable hinge is fully unfolded and the external device is identified, perform the wireless charging with respect to the external device after a predetermined time period is elapsed from a time point that the external device is identified.

5. The electronic device (101, 201) of any one of claim 1 to claim 4, wherein the processor (120, 220) is configured to:
while the out-foldable hinge is at least partially folded and the in-foldable hinge is fully unfolded, supply no electric power to the external device (400) in case that a first signal corresponding to the identification of the external device (400) is not identified.

6. The electronic device (101, 201) of any one of claim 1 to claim 5, wherein the processor (120, 220) is configured to:
display, via the first display portion (261), a guide UI representing that the external device is to be positioned on a charging area for the wireless charging.

7. An electronic device (101, 201) comprising:
a first housing (271);
a second housing (273);
a third housing (275);
an out-foldable hinge (281) connected with the first housing (271) and the second housing (273);
an in-foldable hinge (283) connected with the second housing (273) and the third housing (275);
a wireless charging circuit accommodated in the third housing;
a display (160, 260) including a first display portion (261) disposed on the first housing (271), a second display portion (263) disposed on the second housing (273), and a third display portion (265) disposed on the third housing (275); and
a processor (120, 220) configured to:
while the in-foldable hinge (283) is fully folded and the out-foldable hinge (281) is at least partially unfolded,
identify an external device disposed on a portion of the third housing corresponding to the wireless charging circuit,
display a content indicating a wireless charging is being performed via the first display portion, and
perform the wireless charging with respect to the external device.

8. The electronic device (101, 201) of claim 7, wherein while the in-foldable hinge is fully folded and the out-foldable hinge is at least partially unfolded,
the first display portion is visually exposed, and the second display portion and the third display portion are not visually exposed.

9. The electronic device (101, 201) of claim 8 or claim 9, wherein the processor (120, 220) is configured to:
while the in-foldable hinge is fully folded and the out-foldable hinge is at least partially unfolded, display a window including a button for determining whether to perform the wireless charging.

10. A method for controlling an electronic device (101, 201), comprising:
while an out-foldable hinge (281) connected to a first housing (271) and second housing (273) of the electronic device is at least partially folded and an in-foldable hinge (283) connected to the second housing and a third housing (275) of the electronic device is fully unfolded, identifying an external device (400) disposed on a portion of the third housing of the electronic device corresponding to a wireless charging circuit of the electronic device,
displaying a content indicating a wireless charging is being performed via a first display portion (261) of the electronic device, and
performing the wireless charging with respect to the external device.

11. The method of claim 10, further comprising:
while the out-foldable hinge is at least partially folded and the in-foldable hinge is fully unfolded, displaying a window including a button for determining whether to perform the wireless charging.

12. The method of claim 10 or claim 11, further comprising:
while the out-foldable hinge is at least partially folded and the in-foldable hinge is fully unfolded, supplying no electric power to the external device (400) in case that a first signal corresponding to the identification of the external device (400) is not identified.

13. A method for controlling an electronic device (101, 201), comprising:
while an in-foldable hinge (283) connected to a second housing and a third housing (275) of the electronic device (101, 201) is fully folded and an out-foldable hinge (281) connected to a first housing (271) and the second housing (273) of the electronic device (101, 201) is at least partially unfolded, identifying an external device (400) disposed on a portion of the third housing corresponding to a wireless charging circuit of the electronic device (101, 201),
displaying a content indicating a wireless charging is being performed via a first display portion (261) of the electronic device (101, 201), and
performing the wireless charging with respect to the external device.

14. The method of claim 13, further comprising:
while the in-foldable hinge is fully folded and the out-foldable hinge is at least partially unfolded, the first display portion is visually exposed, and a second display portion of the electronic device (101, 201) and a third display portion of the electronic device (101, 201) are not visually exposed.

15. The method of claim 13 or claim 14, further comprising:
while the in-foldable hinge is fully folded and the out-foldable hinge is at least partially unfolded, displaying a window including a button for determining whether to perform the wireless charging.

## Patentansprüche

1. Elektronische Vorrichtung (101, 201), umfassend:
ein erstes Gehäuse (271);
ein zweites Gehäuse (273);
ein drittes Gehäuse (275);
ein nach außen klappbares Scharnier (281), das mit dem ersten Gehäuse (271) und dem zweiten Gehäuse (273) verbunden ist;
ein nach innen klappbares Scharnier (283), das mit dem zweiten Gehäuse (273) und dem dritten Gehäuse (275) verbunden ist;
eine drahtlose Ladeschaltung, die im dritten Gehäuse untergebracht ist;
eine Anzeige (160, 260) mit einem ersten Anzeigeabschnitt (261), der auf dem ersten Gehäuse (271) angeordnet ist, einem zweiten Anzeigeabschnitt (263), der auf dem zweiten Gehäuse (273) angeordnet ist, und einem dritten Anzeigeabschnitt (265), der auf dem dritten Gehäuse (275) angeordnet ist; und
einen Prozessor (120, 220), der dazu konfiguriert ist,
während das nach außen klappbare Scharnier (281) zumindest teilweise zusammengeklappt und das nach innen klappbare Scharnier (283) vollständig ausgeklappt ist,
eine externe Vorrichtung zu identifizieren, die auf einem der drahtlosen Ladeschaltung entsprechenden Abschnitt des dritten Gehäuses angeordnet ist,
über den ersten Anzeigeabschnitt (261) einen Inhalt anzuzeigen, der angibt, dass eine drahtlose Ladung durchgeführt wird, und
die drahtlose Ladung in Bezug auf die externe Vorrichtung durchzuführen.

2. Elektronische Vorrichtung (101, 201) nach Anspruch 1, wobei der Prozessor (120, 220) dazu konfiguriert ist,
während das nach außen klappbare Scharnier zumindest teilweise zusammengeklappt und das nach innen klappbare Scharnier vollständig ausgeklappt ist,
ein Fenster anzuzeigen, das eine Schaltfläche enthält, um zu bestimmen, ob die drahtlose Ladung durchgeführt werden soll.

3. Elektronische Vorrichtung (101, 201) nach Anspruch 1 oder Anspruch 2, wobei die elektronische Vorrichtung ferner eine Batterie (189) umfasst,
wobei der Prozessor (120, 220) dazu konfiguriert ist,
während das nach außen klappbare Scharnier zumindest teilweise zusammengeklappt und das nach innen klappbare Scharnier vollständig ausgeklappt ist und die drahtlose Ladung durchgeführt wird, Informationen über die verbleibende Ladung der Batterie (189) der elektronischen Vorrichtung (101, 201) anzuzeigen.

4. Elektronische Vorrichtung (101, 201) nach einem der Ansprüche 1 bis 3, wobei der Prozessor (120, 220) dazu konfiguriert ist,
wenn das nach außen klappbare Scharnier zumindest teilweise zusammengeklappt und das nach innen klappbare Scharnier vollständig ausgeklappt ist und die externe Vorrichtung identifiziert wird, die drahtlose Ladung in Bezug auf die externe Vorrichtung durchzuführen, nachdem eine vorbestimmte Zeitspanne ab dem Zeitpunkt verstrichen ist, zu dem die externe Vorrichtung identifiziert wird.

5. Elektronische Vorrichtung (101, 201) nach einem der Ansprüche 1 bis 4, wobei der Prozessor (120, 220) dazu konfiguriert ist,
während das nach außen klappbare Scharnier zumindest teilweise zusammengeklappt und das nach innen klappbare Scharnier vollständig ausgeklappt ist, der externen Vorrichtung (400) keine elektrische Leistung zuzuführen, falls ein erstes Signal, das der Identifizierung der externen Vorrichtung (400) entspricht, nicht identifiziert wird.

6. Elektronische Vorrichtung (101, 201) nach einem der Ansprüche 1 bis 5, wobei der Prozessor (120, 220) dazu konfiguriert ist,
über den ersten Anzeigeabschnitt (261) eine Anleitungs-Benutzeroberfläche anzuzeigen, die angibt, dass die externe Vorrichtung auf einem Ladebereich für die drahtlose Ladung positioniert werden soll.

7. Elektronische Vorrichtung (101, 201), umfassend:
ein erstes Gehäuse (271);
ein zweites Gehäuse (273);
ein drittes Gehäuse (275);
ein nach außen klappbares Scharnier (281), das mit dem ersten Gehäuse (271) und dem zweiten Gehäuse (273) verbunden ist;
ein nach innen klappbares Scharnier (283), das mit dem zweiten Gehäuse (273) und dem dritten Gehäuse (275) verbunden ist;
eine drahtlose Ladeschaltung, die im dritten Gehäuse untergebracht ist;
eine Anzeige (160, 260) mit einem ersten Anzeigeabschnitt (261), der auf dem ersten Gehäuse (271) angeordnet ist, einem zweiten Anzeigeabschnitt (263), der auf dem zweiten Gehäuse (273) angeordnet ist, und einem dritten Anzeigeabschnitt (265), der auf dem dritten Gehäuse (275) angeordnet ist; und
einen Prozessor (120, 220), der dazu konfiguriert ist,
während das nach innen klappbare Scharnier (283) vollständig zusammengeklappt und das nach außen klappbare Scharnier (281) zumindest teilweise ausgeklappt ist,
eine externe Vorrichtung zu identifizieren, die auf einem der drahtlosen Ladeschaltung entsprechenden Abschnitt des dritten Gehäuses angeordnet ist,
über den ersten Anzeigeabschnitt einen Inhalt anzuzeigen, der angibt, dass eine drahtlose Ladung durchgeführt wird, und
die drahtlose Ladung in Bezug auf die externe Vorrichtung durchzuführen.

8. Elektronische Vorrichtung (101, 201) nach Anspruch 7, wobei, während das nach innen klappbare Scharnier vollständig zusammengeklappt und das nach außen klappbare Scharnier zumindest teilweise ausgeklappt ist,
der erste Anzeigeabschnitt visuell freiliegt und der zweite Anzeigeabschnitt und der dritte Anzeigeabschnitt nicht visuell freiliegen.

9. Elektronische Vorrichtung (101, 201) nach Anspruch 8 oder Anspruch 9, wobei der Prozessor (120, 220) dazu konfiguriert ist,
während das nach innen klappbare Scharnier vollständig zusammengeklappt und das nach außen klappbare Scharnier zumindest teilweise ausgeklappt ist, ein Fenster anzuzeigen, das eine Schaltfläche enthält, um zu bestimmen, ob die drahtlose Ladung durchgeführt werden soll.

10. Verfahren zur Steuerung einer elektronischen Vorrichtung (101, 201), umfassend:
während ein nach außen klappbares Scharnier (281), das mit einem ersten Gehäuse (271) und einem zweiten Gehäuse (273) der elektronischen Vorrichtung verbunden ist, zumindest teilweise zusammengeklappt und ein nach innen klappbares Scharnier (283), das mit dem zweiten Gehäuse und einem dritten Gehäuse (275) der elektronischen Vorrichtung verbunden ist, vollständig ausgeklappt ist, Identifizieren einer externen Vorrichtung (400), die auf einem Abschnitt des dritten Gehäuses der elektronischen Vorrichtung angeordnet ist, der einer drahtlosen Ladeschaltung der elektronischen Vorrichtung entspricht,
Anzeigen eines Inhalts, der angibt, dass eine drahtlose Ladung durchgeführt wird, über einen ersten Anzeigeabschnitt (261) der elektronischen Vorrichtung, und
Durchführen der drahtlosen Ladung in Bezug auf die externe Vorrichtung.

11. Verfahren nach Anspruch 10, umfassend ferner:
während das nach außen klappbare Scharnier zumindest teilweise zusammengeklappt und das nach innen klappbare Scharnier vollständig ausgeklappt ist, Anzeigen eines Fensters, das eine Schaltfläche enthält, um zu bestimmen, ob die drahtlose Ladung durchgeführt werden soll.

12. Verfahren nach Anspruch 10 oder Anspruch 11, ferner umfassend:
während das nach außen klappbare Scharnier zumindest teilweise zusammengeklappt und das nach innen klappbare Scharnier vollständig ausgeklappt ist, Zuführen keiner elektrischen Leistung zur externen Vorrichtung (400), falls ein erstes Signal, das der Identifizierung der externen Vorrichtung (400) entspricht, nicht identifiziert wird.

13. Verfahren zur Steuerung einer elektronischen Vorrichtung (101, 201), umfassend:
während ein nach innen klappbares Scharnier (283), das mit einem zweiten Gehäuse und einem dritten Gehäuse (275) der elektronischen Vorrichtung (101, 201) verbunden ist, vollständig zusammengeklappt und ein nach außen klappbares Scharnier (281), das mit einem ersten Gehäuse (271) und dem zweiten Gehäuse (273) der elektronischen Vorrichtung (101, 201) verbunden ist, zumindest teilweise ausgeklappt ist, Identifizieren einer externen Vorrichtung (400), die auf einem Abschnitt des dritten Gehäuses angeordnet ist, der einer drahtlosen Ladeschaltung der elektronischen Vorrichtung (101, 201) entspricht,
Anzeigen eines Inhalts, der angibt, dass eine drahtlose Ladung durchgeführt wird, über einen ersten Anzeigeabschnitt (261) der elektronischen Vorrichtung (101, 201), und
Durchführen der drahtlosen Ladung in Bezug auf die externe Vorrichtung.

14. Verfahren nach Anspruch 13, umfassend ferner:
während das nach innen klappbare Scharnier vollständig zusammengeklappt und das nach außen klappbare Scharnier zumindest teilweise ausgeklappt ist, der erste Anzeigeabschnitt visuell freiliegt und ein zweiter Anzeigeabschnitt der elektronischen Vorrichtung (101, 201) und ein dritter Anzeigeabschnitt der elektronischen Vorrichtung (101, 201) visuell freiliegen.

15. Verfahren nach Anspruch 13 oder Anspruch 14, umfassend ferner:
während das nach innen klappbare Scharnier vollständig zusammengeklappt und das nach außen klappbare Scharnier zumindest teilweise ausgeklappt ist, Anzeigen eines Fensters, das eine Schaltfläche enthält, um zu bestimmen, ob die drahtlose Ladung durchgeführt werden soll.

## Revendications

1. Dispositif électronique (101, 201) comprenant :
un premier boîtier (271) ;
un deuxième boîtier (273) ;
un troisième boîtier (275) ;
une charnière pliable vers l'extérieur (281) reliée au premier boîtier (271) et au deuxième boîtier (273) ;
une charnière pliable vers l'intérieur (283) reliée au deuxième boîtier (273) et au troisième boîtier (275) ;
un circuit de charge sans fil logé dans le troisième boîtier ;
un écran (160, 260) incluant une première partie d'écran (261) disposée sur le premier boîtier (271), une deuxième partie d'écran (263) disposée sur le deuxième boîtier (273), et une troisième partie d'écran (265) disposée sur le troisième boîtier (275) ; et
un processeur (120, 220) configuré pour :
lorsque la charnière pliable vers l'extérieur (281) est au moins partiellement pliée et que la charnière pliable vers l'intérieur (283) est complètement dépliée,
identifier un dispositif externe disposé sur une partie du troisième boîtier correspondant au circuit de charge sans fil,
afficher un contenu indiquant qu'une charge sans fil est en cours d'exécution via la première partie d'écran (261), et
effectuer la charge sans fil à destination du dispositif externe.

2. Dispositif électronique (101, 201) selon la revendication 1, dans lequel le processeur (120, 220) est configuré pour :
lorsque la charnière pliable vers l'extérieur est au moins partiellement pliée et que la charnière pliable vers l'intérieur est complètement dépliée,
afficher une fenêtre incluant un bouton pour déterminer s'il convient d'effectuer la charge sans fil.

3. Dispositif électronique (101, 201) selon la revendication 1 ou la revendication 2, dans lequel le dispositif électronique comprend en outre une batterie (189),
dans lequel le processeur (120, 220) est configuré pour :
lorsque la charnière pliable vers l'extérieur est au moins partiellement pliée, que la charnière pliable vers l'intérieur est complètement dépliée et que la charge sans fil est en cours d'exécution, afficher des informations sur une quantité restante de la batterie (189) du dispositif électronique (101, 201).

4. Dispositif électronique (101, 201) selon l'une quelconque des revendications 1 à 3, dans lequel le processeur (120, 220) est configuré pour :
lorsque la charnière pliable vers l'extérieur est au moins partiellement pliée, que la charnière pliable vers l'intérieur est complètement dépliée et que le dispositif externe est identifié, effectuer la charge sans fil à destination du dispositif externe après qu'une période de temps prédéterminée s'est écoulée à partir d'un point temporel où le dispositif externe est identifié.

5. Dispositif électronique (101, 201) selon l'une quelconque des revendications 1 à 4, dans lequel le processeur (120, 220) est configuré pour :
lorsque la charnière pliable vers l'extérieur est au moins partiellement pliée et que la charnière pliable vers l'intérieur est complètement dépliée, ne fournir aucune énergie électrique au dispositif externe (400) dans le cas où un premier signal correspondant à l'identification du dispositif externe (400) n'est pas identifié.

6. Dispositif électronique (101, 201) selon l'une quelconque des revendications 1 à 5, dans lequel le processeur (120, 220) est configuré pour :
afficher, via la première partie d'écran (261), une UI de guidage indiquant que le dispositif externe doit être positionné sur une zone de charge pour la charge sans fil.

7. Dispositif électronique (101, 201) comprenant :
un premier boîtier (271) ;
un deuxième boîtier (273) ;
un troisième boîtier (275) ;
une charnière pliable vers l'extérieur (281) reliée au premier boîtier (271) et au deuxième boîtier (273) ;
une charnière pliable vers l'intérieur (283) reliée au deuxième boîtier (273) et au troisième boîtier (275) ;
un circuit de charge sans fil logé dans le troisième boîtier ;
un écran (160, 260) incluant une première partie d'écran (261) disposée sur le premier boîtier (271), une deuxième partie d'écran (263) disposée sur le deuxième boîtier (273), et une troisième partie d'écran (265) disposée sur le troisième boîtier (275) ; et
un processeur (120, 220) configuré pour :
lorsque la charnière pliable vers l'intérieur (283) est complètement pliée et que la charnière pliable vers l'extérieur (281) est au moins partiellement dépliée,
identifier un dispositif externe disposé sur une partie du troisième boîtier correspondant au circuit de charge sans fil,
afficher un contenu indiquant qu'une charge sans fil est en cours d'exécution via la première partie d'écran, et
effectuer la charge sans fil à destination du dispositif externe.

8. Dispositif électronique (101, 201) selon la revendication 7, dans lequel lorsque la charnière pliable vers l'intérieur est complètement pliée et que la charnière pliable vers l'extérieur est au moins partiellement dépliée,
la première partie d'écran est visuellement exposée, et la deuxième partie d'écran ainsi que la troisième partie d'écran ne sont pas visuellement exposées.

9. Dispositif électronique (101, 201) selon la revendication 8 ou la revendication 9, dans lequel le processeur (120, 220) est configuré pour :
lorsque la charnière pliable vers l'intérieur est complètement pliée et que la charnière pliable vers l'extérieur est au moins partiellement dépliée, afficher une fenêtre incluant un bouton pour déterminer s'il convient d'effectuer la charge sans fil.

10. Procédé de commande d'un dispositif électronique (101, 201), comprenant :
lorsqu'une charnière pliable vers l'extérieur (281) reliée à un premier boîtier (271) et à un deuxième boîtier (273) du dispositif électronique est au moins partiellement pliée et qu'une charnière pliable vers l'intérieur (283) reliée à un deuxième boîtier et à un troisième boîtier (275) du dispositif électronique est complètement dépliée, identifier un dispositif externe (400) disposé sur une partie du troisième boîtier du dispositif électronique correspondant à un circuit de charge sans fil du dispositif électronique,
afficher un contenu indiquant qu'une charge sans fil est en cours d'exécution via une première partie d'écran (261) du dispositif électronique, et
effectuer la charge sans fil à destination du dispositif externe.

11. Procédé selon la revendication 10, comprenant en outre :
alors que la charnière pliable vers l'extérieur est au moins partiellement pliée et que la charnière pliable vers l'intérieur est complètement dépliée, afficher une fenêtre incluant un bouton pour déterminer s'il convient d'effectuer la charge sans fil.

12. Procédé selon la revendication 10 ou la revendication 11, comprenant en outre :
lorsque la charnière pliable vers l'extérieur est au moins partiellement pliée et que la charnière pliable vers l'intérieur est complètement dépliée, ne fournir aucune énergie électrique au dispositif externe (400) dans le cas où un premier signal correspondant à l'identification du dispositif externe (400) n'est pas identifié.

13. Procédé de commande d'un dispositif électronique (101, 201), comprenant :
lorsqu'une charnière pliable vers l'intérieur (283) reliée à un deuxième boîtier et à un troisième boîtier (275) du dispositif électronique (101, 201) est complètement pliée et qu'une charnière pliable vers l'extérieur (281) reliée à un premier boîtier (271) et à un deuxième boîtier (273) du dispositif électronique (101, 201) est au moins partiellement dépliée, identifier un dispositif externe (400) disposé sur une partie du troisième boîtier correspondant à un circuit de charge sans fil du dispositif électronique (101, 201),
afficher un contenu indiquant qu'une charge sans fil est en cours d'exécution via une première partie d'écran (261) du dispositif électronique (101, 201), et
effectuer la charge sans fil à destination du dispositif externe.

14. Procédé selon la revendication 13, comprenant en outre :
lorsque la charnière pliable vers l'intérieur est complètement pliée et que la charnière pliable vers l'extérieur est au moins partiellement dépliée, la première partie d'écran est visuellement exposée, et une deuxième partie d'écran du dispositif électronique (101, 201) ainsi qu'une troisième partie d'écran du dispositif électronique (101, 201) ne sont pas visuellement exposées.

15. Procédé selon la revendication 13 ou la revendication 14, comprenant en outre :
lorsque la charnière pliable vers l'intérieur est complètement pliée et que la charnière pliable vers l'extérieur est au moins partiellement dépliée, afficher une fenêtre incluant un bouton pour déterminer s'il convient d'effectuer la charge sans fil.
